# EUROPEAN PATENT APPLICATION

(11) **EP 4 131 740 A1**
(43) Date of publication of application: **08.02.2023**
(21) Application number: 21776650.0
(22) Date of filing: 17.03.2021
(51) Int. Cl.: H02K 7/18, H02K 7/06

(54) **ELECTROMECHANICAL DEVICE**

(30) Priority: 27.03.2020 JP 2020058384
(71) Applicant: PANASONIC INTELLECTUAL PROPERTY MANAGEMENT CO., LTD., Chuo-ku Osaka-shi Osaka 540-6207 (JP)
(72) Inventor: ABE, Hideaki, Osaka-shi, Osaka 540-6207 (JP)
(74) Representative: Müller-Boré & Partner Patentanwälte PartG mbB
(86) International application number: PCT/JP2021/010752
(87) International publication number: WO 2021/193272

(57) **Abstract**

A gear mechanism (12) has an input shaft (12a) and transmits rotation of the input shaft (12a). A generator (13) generates electric power in response to the rotation transmitted by the gear mechanism (12). A pendulum (11) is connected to the input shaft (12a) of the gear mechanism (12). A frame (14) is provided at a fixed position relative to the gear mechanism (12) and the generator (13). A elastic body (16) supports the pendulum (11) with respect to the frame (14) so as to generate a restoring force to a predetermined position. The pendulum (11) swings about the input shaft (12a) of the gear mechanism (12) in response to shaking of a whole of an electromechanical apparatus (1), or in response to the restoring force of the elastic body (16), and the generator (13) generates the electric power in response to swinging of the pendulum (11).

## Description

### TECHNICAL FIELD

The present disclosure relates to an electromechanical apparatus provided with a generator.

### BACKGROUND ART

In recent years, in consideration of fossil fuel depletion and global warming prevention, utilization of natural energy and various kinds of ambient energy has been actively promoted. As utilization of the natural energy, for example, it is known to generate electric power using a solar cell or a wind power generator. In addition, as utilization of the ambient energy, for example, it is known to generate electric power using energy obtained from daily activities of a user (human-powered generation), piezoelectric energy (vibration power generation), energy of electromagnetic waves such as broadcast waves, or the like. To harvest and use the ambient energy draws attention as "environmental generation" or "energy harvesting".

For example, Patent Document 1 discloses a mobile terminal apparatus in which a generator unit obtains an electromotive force by relatively swinging a housing with respect to an auxiliary member attached to a garment, a belt, or a bag, in a manner like a pendulum.

### CITATION LIST

### PATENT DOCUMENTS

PATENT DOCUMENT 1: Japanese Patent No. JP 5166193 B

### SUMMARY OF INVENTION

### TECHNICAL PROBLEM

According to the apparatus of Patent Document 1, it is possible to generate electric power by movement, such as a user's walking, and charge a secondary battery of a mobile terminal apparatus. However, in order to swing the housing, the posture of the housing and the posture of the user are restricted. In addition, when the user is not walking, power cannot be generated. In addition, in order to generate electric power larger than the electric power required for charging the secondary battery, the user is required to move consciously with fatigue. Therefore, there is a demand for an electromechanical apparatus being capable of continuously and unconsciously extracting larger electric power than that of the prior art, from a user's daily activities and the like, at more opportunities than that of the prior art, while being able to be arranged in various postures.

The present disclosure provides an electromechanical apparatus provided with a generator, the electromechanical apparatus being capable of continuously and unconsciously extracting larger electric power than that of the prior art, from a user's daily activities and the like, at more opportunities than that of the prior art, while being able to be arranged in various postures.

### SOLUTION TO PROBLEM

According to an electromechanical apparatus of one aspect of the present disclosure, the electromechanical apparatus is provided with: a gear mechanism that has an input shaft and transmits rotation of the input shaft; a generator that generates electric power in response to the rotation transmitted by the gear mechanism; a pendulum that is connected to the input shaft; a frame provided at a fixed position relative to the gear mechanism and the generator; and a first elastic body that supports the pendulum with respect to the frame so as to generate a restoring force to a predetermined position. The pendulum swings about the input shaft in response to shaking of a whole of the electromechanical apparatus, or in response to the restoring force of the first elastic body, and the generator generates the electric power in response to swinging of the pendulum.

### ADVANTAGEOUS EFFECTS OF INVENTION

According to the electromechanical apparatus of one aspect of the present disclosure, it is possible to continuously and unconsciously extract larger electric power than that of the prior art, from the user's daily activities and the like, at more opportunities than that of the prior art, while being able to be arranged in various postures.

### BRIEF DESCRIPTION OF DRAWINGS

Fig. 1 is a front view showing a configuration of an electromechanical apparatus 1 according to a first embodiment.
Fig. 2 is a side view showing the configuration of the electromechanical apparatus 1 of Fig. 1.
Fig. 3 is a circuit diagram showing a configuration of a power converter circuit 15 of Fig. 1.
Fig. 4 is a diagram for explaining the operation of the electromechanical apparatus 1 of Fig. 1.
Fig. 5 is a front view showing a configuration of an electromechanical apparatus 2 according to a comparison example.
Fig. 6 is a side view showing the configuration of the electromechanical apparatus 2 of Fig. 5.
Fig. 7 is a diagram for explaining a relationship between walking of a user 100 and a pendulum 11 of the electromechanical apparatus 1 of Fig. 1.
Fig. 8 is a diagram showing a first use example of the electromechanical apparatus 1 of Fig. 1.
Fig. 9 is a diagram showing a second use example of the electromechanical apparatus 1 of Fig. 1.
Fig. 10 is a diagram showing a third use example of the electromechanical apparatus 1 of Fig. 1.
Fig. 11 is a fourth use example of the electromechanical apparatus 1 of Fig. 1, and is a diagram for explaining power generation when the user 100 is walking.
Fig. 12 is the fourth use example of the electromechanical apparatus 1 of Fig. 1, and is a diagram for explaining power generation when the user 100 is stopping.
Fig. 13 is a front view showing a configuration of an electromechanical apparatus 1A according to a first modified embodiment of the first embodiment.
Fig. 14 is a side view showing the configuration of the electromechanical apparatus 1A of Fig. 13.
Fig. 15 is a diagram for explaining a first operation example of the electromechanical apparatus 1A of Fig. 13.
Fig. 16 is a diagram for explaining a second operation example of the electromechanical apparatus 1A of Fig. 13.
Fig. 17 is a front view showing a configuration of an electromechanical apparatus 1B according to a second modified embodiment of the first embodiment.
Fig. 18 is a side view showing the configuration of the electromechanical apparatus 1B of Fig. 17.
Fig. 19 is a front view showing a configuration of an electromechanical apparatus 1C according to a third modified embodiment of the first embodiment.
Fig. 20 is a front view showing a configuration of an electromechanical apparatus 1D according to a fourth modified embodiment of the first embodiment.
Fig. 21 is a diagram showing a first use example of the electromechanical apparatus 1C of Fig. 19.
Fig. 22 is a diagram showing a second use example of the electromechanical apparatus 1C of Fig. 19.
Fig. 23 is a diagram showing a third use example of the electromechanical apparatus 1C of Fig. 19.
Fig. 24 is a diagram showing a fourth use example of the electromechanical apparatus 1C of Fig. 19.
Fig. 25 is a diagram showing a fifth use example of the electromechanical apparatus 1C of Fig. 19.
Fig. 26 is a diagram showing a sixth use example of the electromechanical apparatus 1C of Fig. 19.
Fig. 27 is a diagram showing a seventh use example of the electromechanical apparatus 1C of Fig. 19.
Fig. 28 is a diagram showing an eighth use example of the electromechanical apparatus 1C of Fig. 19.
Fig. 29 is a diagram showing a ninth use example of the electromechanical apparatus 1C of Fig. 19.
Fig. 30 is a diagram showing a tenth use example of the electromechanical apparatus 1C of Fig. 19.
Fig. 31 is a diagram showing an eleventh use example of the electromechanical apparatus 1C of Fig. 19.
Fig. 32 is a diagram showing a twelfth use example of the electromechanical apparatus 1C of Fig. 19.
Fig. 33 is a diagram showing a thirteenth use example of the electromechanical apparatus 1C of Fig. 19.
Fig. 34 is a diagram showing a fifth use example of the electromechanical apparatus 1 of Fig. 1.
Fig. 35 is a diagram showing a sixth use example of the electromechanical apparatus 1 of Fig. 1.
Fig. 36 is a front view showing a configuration of an electromechanical apparatus 1E according to a second embodiment.
Fig. 37 is a side view showing the configuration of the electromechanical apparatus 1E of Fig. 36.
Fig. 38 is a diagram for explaining the operation of the electromechanical apparatus 1E of Fig. 36.
Fig. 39 is a diagram showing a use example of an electromechanical apparatus 1F according to a first modified embodiment of the second embodiment.
Fig. 40 is a front view showing a configuration of an electromechanical apparatus 1G according to a second modified embodiment of the second embodiment.
Fig. 41 is a side view showing a configuration of an electromechanical apparatus 1H according to a third modified embodiment of the second embodiment.
Fig. 42 is a side view showing a configuration of an electromechanical apparatus 3 according to a third embodiment.
Fig. 43 is a front view showing a configuration of the electromechanical apparatus 3 of Fig. 42.
Fig. 44 is a diagram for explaining the operation of the electromechanical apparatus 3 of Fig. 42.
Fig. 45 is a side view showing a configuration of an electromechanical apparatus 3A according to a first modified embodiment of the third embodiment.
Fig. 46 is a front view showing the configuration of the electromechanical apparatus 3A of Fig. 45.
Fig. 47 is a front view showing a configuration of an electromechanical apparatus 3B according to a second modified embodiment of the third embodiment.
Fig. 48 is a diagram showing a first use example of the electromechanical apparatus 3 of Fig. 42.
Fig. 49 is a diagram showing the first use example of the electromechanical apparatus 3 of Fig. 42.
Fig. 50 is a diagram showing a second use example of the electromechanical apparatus 3 of Fig. 42.
Fig. 51 is a diagram showing the second use example of the electromechanical apparatus 3 of Fig. 42.
Fig. 52 is a diagram showing a third use example of the electromechanical apparatus 3 of Fig. 42.
Fig. 53 is a diagram showing a fourth use example of the electromechanical apparatus 3 of Fig. 42.
Fig. 54 is a diagram showing a fifth use example of the electromechanical apparatus 3 of Fig. 42.
Fig. 55 is a diagram showing a sixth use example of the electromechanical apparatus 3 of Fig. 42.
Fig. 56 is a diagram showing the sixth use example of the electromechanical apparatus 3 of Fig. 42.

### DESCRIPTION OF EMBODIMENTS

Hereinafter, embodiments of the present disclosure will be described with reference to the drawings. In the drawings, the same reference signs indicate similar components.

### FIRST EMBODIMENT

### [Overall Configuration]

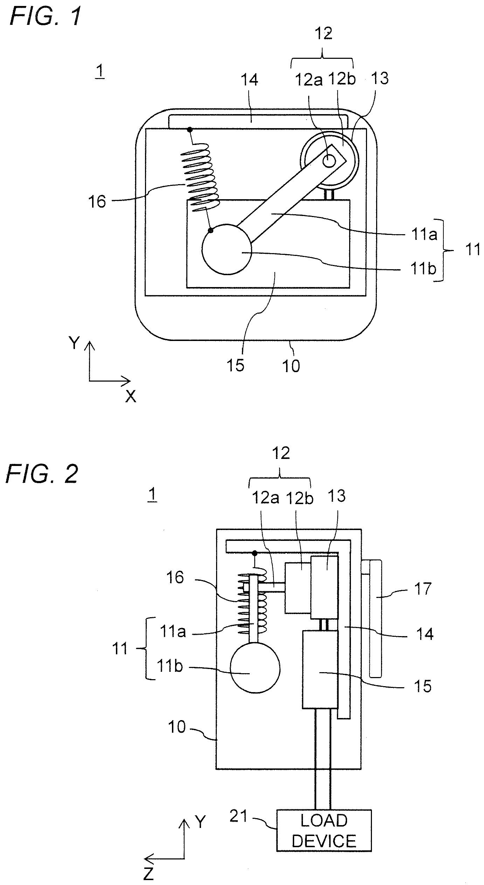

Fig. 1 is a front view showing a configuration of an electromechanical apparatus 1 according to a first embodiment. Fig. 2 is a side view showing the configuration of the electromechanical apparatus 1 of Fig. 1. The electromechanical apparatus 1 is provided with a housing 10, a pendulum 11, a gear mechanism 12, a generator 13, a frame 14, a power converter circuit 15, an elastic body 16, and a faster 17. The electromechanical apparatus 1 is, for example, a wearable apparatus attached to a body of a user. The electromechanical apparatus 1 generates electric power in response to shaking of a whole, and supplies the generated electric power to a load device 21.

Referring to Figs. 1 and 2, the pendulum 11 is connected to, i.e., engaged or integrated with, an input shaft 12a (described later) of the gear mechanism 12. The pendulum 11 swings about the input shaft 12a of the gear mechanism 12 at least within a predetermined angular range in response to shaking of the whole of the electromechanical apparatus 1. Torque generated by the pendulum 11 is transmitted to the gear mechanism 12 via the input shaft 12a. The pendulum 11 is provided with, for example, an arm 11a connected to the input shaft 12a of the gear mechanism 12, and a bob 11b connected to the arm 11a. The bob 11b may be iron, lead, synthetic resin (plastic or the like), stone, sand, liquid (water or the like), coin, or the like. The arm 11a and the bob 11b may be fixedly connected to each other by screwing, bonding, welding, or the like. With this configuration, it is possible to effectively transmit the force acting on the bob 11b, as torque to the gear mechanism 12. The arm 11a and the bob 11b may be movably connected to each other by a connecting member, such as an elastic body or a ring. With this configuration, the force acting on the bob 11b is indirectly transmitted to the arm 11a via the connecting member, and therefore, it is possible to adjust the magnitude of torque, and the time length during which the torque is transmitted. The connecting member can be appropriately configured according to the application of the electromechanical apparatus 1, and according to the load device 21. Alternatively, the pendulum 11 may be integrally formed as a single member.

The gear mechanism 12 has the input shaft 12a, a housing 12b, and internal gears (not shown), and transmits rotation of the input shaft 12a to the generator 13. The gear mechanism 12 may be configured to transmit the rotation of the input shaft 12a to the generator 13 at an increasing gear ratio. The gear mechanism 12 may include a multi-stage planetary gear mechanisms. In this case, a gear mechanism having a large increasing gear ratio can be compactly packed in alignment with the input shaft 12a of the generator 13. The gear mechanism 12 may include a spur gear mechanism, or a gear mechanism of other types.

The generator 13 is provided with a stator, a rotor, and a gear fixed to a rotating shaft of the rotor. The rotation transmitted from the gear mechanism 12 is inputted to the generator 13 via the gear. The generator 13 has a pair of output terminals, and generates electric power at the output terminals in response to the rotation transmitted by the gear mechanism 12. The generator 13 may be a DC generator or an AC generator.

The gear mechanism 12 and the generator 13 may be integrated with each other.

An operation of a generator and an operation of a motor are reversible to each other. Therefore, instead of using the generator 13 and the gear mechanism 12 having an increasing gear ratio, a motor and a gear mechanism having a decreasing gear ratio may be used. In this case, the gear mechanism transmits the rotation of the output shaft to the motor at an increasing gear ratio equal to a reciprocal of the decreasing gear ratio. Then, the motor generates electric power in response to the rotation transmitted by the gear mechanism.

The frame 14 is provided at a fixed position relative to the gear mechanism 12 and the generator 13. Here, "a fixed position relative to ..." means that the frame 14 is fixed directly or indirectly to the gear mechanism 12 and the generator 13 so that the relative position does not vary with respect to the gear mechanism 12 and the generator 13.

The elastic body 16 supports the pendulum 11 with respect to the frame 14 so as to generate a restoring force to a predetermined position. In the example of Fig. 1, the elastic body 16 is a coil spring; one end thereof is connected to the arm 1 1a or the bob 11b of the pendulum 11, and the other end thereof is connected to the frame 14. The example of Fig. 1 shows a case where one end of the elastic body 16 is connected to the bob 11b, but one end of the elastic body 16 may be connected to the arm 11a instead of the bob 11b. In addition, Fig. 1 shows a steady state of the pendulum 11. In the example of Fig. 1, the pendulum 11 is supported by the elastic body 16 such that in the steady state, the weight of the pendulum 11 is balanced with the restoring force of the elastic body 16, and the pendulum 11 is stationary at a position higher than the lowest position. When the pendulum 11 rotates clockwise or counterclockwise from the position of the steady state, the elastic body 16 generates a restoring force so as to return the pendulum 11 to the position of the steady state. When the elastic body 16 is compressed and extended within the plane including the trajectory of the pendulum 11 (that is, a plane perpendicular to the input shaft 12a of the gear mechanism 12), the elastic body 16 can effectively apply the restoring force to the pendulum 11. Accordingly, the frame 14 is formed to be connectable to the elastic body 16, such that the elastic body 16 is compressed and extended within the plane including the trajectory of the pendulum 11. The elastic body 16 may be directly connected to the frame 14, or may be indirectly connected to the frame 14 via other members.

The power converter circuit 15 rectifies and/or stores the electric power generated by the generator 13, for use by the load device 21 at a subsequent stage.

The load device 21 operates with the electric power generated by the generator 13. The load device 21 includes, for example, at least one of a lighting device, a rechargeable battery, a motor, a sensor, and a wireless communication device.

The housing 10 surrounds the pendulum 11, the gear mechanism 12, the generator 13, the frame 14, the power converter circuit 15, and the elastic body 16. The housing 10 may be provided at a fixed position relative to the gear mechanism 12, the generator 13, and the frame 14. In this case, one end of the elastic body 16 may be connected to the housing 10, instead of being connected to the frame 14. In addition, the power converter circuit 15 may be omitted, may be provided outside the housing 10, or may be integrated with, for example, the load device 21. Figs. 1 and 2 show the housing 10 as cutaway views for illustration purposes.

The faster 17 is provided for attaching the electromechanical apparatus 1 to a movable external object (hereinafter, also referred to as a "movable object"). The faster 17 is fixed to the generator 13, the frame 14, or the housing 10. As used herein, the "movable object" may refer to a body of a human or an animal, may refer to an article attached to or held by a human or an animal, may refer to a mechanical device, or may refer to an article deformed by wind power or hydraulic power. The electromechanical apparatus 1 is attached to the movable object by the faster 17, such that the electromechanical apparatus 1 follows the movement of the movable object. The faster 17 may be configured to be inserted into, for example, a belt, a garment, or the like, or sandwiched therebetween. The faster 17 may be made of one member, or may be made of a plurality of members including a spring or the like. In addition, the faster 17 may be a safety pin, a hook-and-loop fastener, or the like, that can be attached to a garment, or may be an adhesive tape that can be adhered to a garment or skin. In addition, the faster 17 may be a belt or a string that can be wrapped around an arm, a leg, a body, or the like. In addition, the faster 17 may be a string that can be tied to a shoelace or the like. If the movable object is a non-living matter, the faster 17 may include a screw.

When the movable object is configured to hold the electromechanical apparatus 1 in a substantially fixed manner, for example, when the electromechanical apparatus 1 is inserted into a pocket of a garment or the like, the fastener 17 may be omitted.

The pendulum 11 swings about the input shaft 12a of the gear mechanism 12 in response to the shaking of the whole of the electromechanical apparatus 1, or in response to the restoring force of the elastic body 16, and the generator 13 generates electric power in response to the swinging of the pendulum 11. By attaching the electromechanical apparatus 1 to the movable object, the electromechanical apparatus 1 follows the movement of the movable object and shakes as a whole. Acceleration or deceleration of the movable object generates a force such as inertial force and centrifugal force on the pendulum 11, and these forces displace or swing the pendulum 11 with reference to the position of the pendulum 11 when the movable object is stationary or in uniform linear motion. Note that a force acting when the stationary pendulum 11 starts to move, and a force acting when the moving pendulum 11 stops or moves in the opposite direction are referred to as an "inertial force" for convenience purposes. Since many movement of the movable object, such as a human or an object, involve acceleration and deceleration, it is possible to utilize the inertial force and centrifugal force acting on the bob 11b during the acceleration or deceleration. Even when a small force acts on the bob 11b, it is possible to transmit a large torque to the gear mechanism 12 and the generator 13 via the arm 11a using the principle of leverage. Thus, the pendulum 11 swings about the input shaft 12a of the gear mechanism 12 in response to the shaking of the whole of the electromechanical apparatus 1, and the generator 13 generates positive and negative voltages at the output terminals in response to the swinging of the pendulum 11. The electric power generated by the generator 13 is supplied to the load device 21 via the power converter circuit 15.

### [Configuration of Power Converter Circuit]

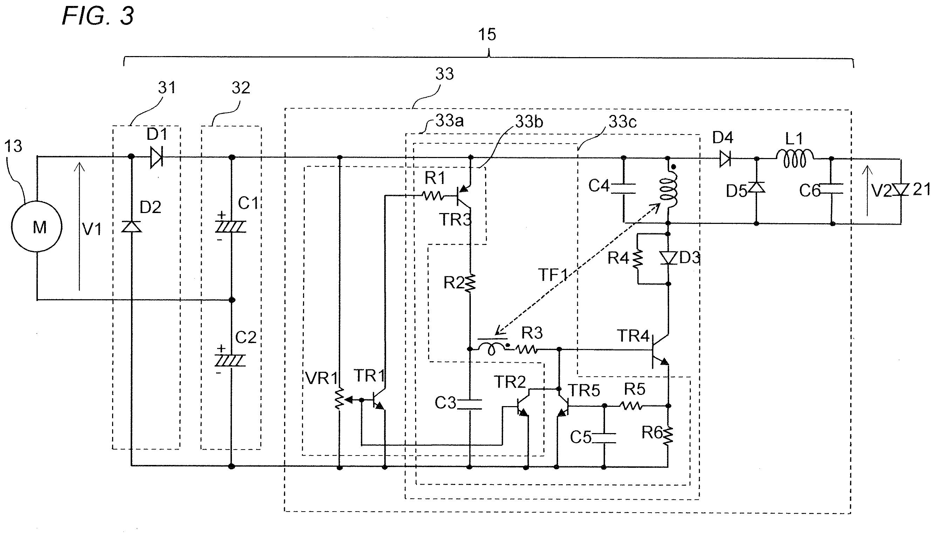

Next, with reference to Fig. 3, we explain an exemplary configuration of the power converter circuit 15.

Fig. 3 is a circuit diagram showing a configuration of the power converter circuit 15 of Fig. 1. The power converter circuit 15 is provided with a rectifier circuit 31, a power storage circuit 32, and a control circuit 33. The rectifier circuit 31 rectifies the electric power generated by the generator 13. Even when the generator 13 is a DC generator, rectification is required to store generated electric power in a capacitor or a secondary battery, because the generator 13 rotates in opposite directions when the pendulum 11 moves back and forth, and thus, voltages of opposite polarities are generated. The power storage circuit 32 is provided with at least one capacitor that stores energy of electric power rectified by the rectifier circuit 31. The control circuit 33 controls discharge of the power storage circuit 32. The control circuit 33 may include, for example, an active booster circuit provided with power transistors or the like, and may control the discharge of the power storage circuit 32 in accordance with the operation of the load device 21.

Referring to Fig. 3, the rectifier circuit 31 is provided with two diodes D1 and D2. The power storage circuit 32 is provided with two capacitors C1 and C2. The control circuit 33 is provided with capacitors C3 to C6, diodes D3 to D5, a coil L1, resistors R1 to R6, a variable resistor VR1, a transformer TF1, and transistors TR1 to TR5. In addition, in the example of Fig. 3, the load device 21 is provided with a light emitting diode (LED).

The diodes D1 and D2 and the capacitors C1 and C2 constitute a voltage doubler rectifier circuit that performs voltage doubling rectification of the voltage generated by the generator 13. During a series of actions including movements in the opposite directions, such as swinging of the pendulum 11, voltages of opposite polarities are generated when the pendulum 11 moves back and forth. By performing voltage doubling rectification on the generated voltage, instead of full-wave rectification, it is possible to twice the voltage stored during the series of actions, as compared to that of the full-wave rectification. Thus, it is possible to operate subsequent-stage circuits of the power storage circuit 32 (that is, the control circuit 33 and the load device 21) at a high voltage, and improve the efficiency of the subsequent-stage circuits. On the other hand, in the case of the full-wave rectification, since the same extent of voltage is generated when the pendulum 11 moves to the right and to the left, doubling the duration of power generation does not increase the stored electrical energy.

The capacitors C1 and C2 are, for example, electrolytic capacitors. In addition, the capacitors C1 and C2 may be electric double-layer capacitors, secondary batteries, or the like.

In the control circuit 33, the capacitors C3 to C5, the diode D3, the resistors R1 to R6, the transformer TF1, and the transistors TR2 to TR5 constitute an inverter circuit 33a. The inverter circuit 33a operates as a voltage-resonance inverter circuit, and performs soft switching (zero-volt switching). In addition, the capacitor C3, the resistor R1, the variable resistor VR1, and the transistors TR1 to TR3 constitute a voltage setting circuit 33b. The voltage setting circuit 33b uses the variable resistor VR1 and the transistor TR1 to set the voltage range in which the electromechanical apparatus 1 operates, particularly set a lower limit voltage of an output voltage of the power storage circuit 32. The control circuit 33 stops supplying electric power from the power storage circuit 32 to the load device 21 (light emitting diode), when the voltage across the both ends of the capacitors C1 and C2 of the power storage circuit 32 is equal to or lower than the lower limit voltage set by the voltage setting circuit 33b. In addition, the capacitors C3 and C5, the resistors R1 to R3, R5, and R6, the transformer TF1, and the transistors TR2, TR3, and TR5 constitute a constant-current control circuit 33c.

In general, when a capacitor is charged from a completely empty state, the theoretical efficiency of charging is 50%. Further, when the load device is operated at a time different from that of power generation, this electric power is required, and therefore, the capacitor needs to store the minimum energy at all times. In addition, when the load device is operated, the minimum voltage enough to start the transistors and others of the control circuit is required. For these reasons, the control circuit 33 sets the lower limit voltage of the power storage circuit 32. For example, it is assumed that the generated voltage at the time of power generation per one generator 13 (induced electromotive force, speed electromotive force) is 12 (V). In this case, when the voltage V1 of the capacitor C 1 (assuming capacitance C 1 = 0.01 F) after generating electric power for 1 second is 10V, the energy of the capacitor C1 is 1/2 x C1 × V1² = 0.5 (J). Subsequently, when the control circuit 33 operates the load device 21, and the voltage of the capacitor C1 decreases to the minimum voltage V01 (assuming 1.5 (V)), the remaining energy of the capacitor C1 is 1/2 x C1 x V01² = 0.011 (J). Therefore, the available energy is about 0.49 (J). Thus, by setting the lower limit voltage, it is possible to sufficiently utilize the energy of the capacitors C1 and C2, and reliably operate the load device 21.

When the lower limit voltage is not set to the power storage circuit 32, the control circuit 33 may be omitted. In addition, the load device 21 may be provided with a control circuit that controls discharging of the power storage circuit 32 according to the operation of the load device 21.

Each embodiment of the present disclosure is directed to efficient recovery of mechanical energy utilizing the force generated by the acceleration and deceleration of a movable object, such as a human, as well as utilizing the gravity, centrifugal force, and the like. In order to increase the stored electrical energy or drive arbitrary load device, it is desirable to increase the output voltage of the generator 13. Therefore, it is important to increase the increasing gear ratio of the gear mechanism 12, or increase the counter electromotive voltage constant (an index of generation of a high induced voltage at a low speed rotation) of the generator 13. However, there are limits to the increases in these parameters due to various factors including size, loss, cost, and the like. In this case, in order to increase the output voltage of the generator 13, voltage multiplying rectification using rectification and charging, such as voltage doubling rectification, is effectively available. The voltage multiplying rectification is available when the generator 13 generates an AC output voltage. The generator 13 repeats forward rotation and reverse rotation according to the swinging of the pendulum 11 to continuously generate an AC voltage including positive and negative voltages at the output terminals. By performing the voltage doubling rectification on this AC voltage, it is possible to efficiently capture mechanical energy. In addition, by connecting three or more capacitors in series in the power storage circuit 32, further voltage multiplying rectification may be performed, such as tripling, quadrupling, and so on. By performing the voltage doubling rectification (or voltage multiplying rectification), it is possible to increase the output voltage of the power storage circuit 32, and increase stored electric energy of the power storage circuit 32. In addition, when the power converter circuit 15 or the load device 21 includes a booster circuit, it is possible to improve the efficiency of the booster circuit by increasing a pre-boost voltage using the voltage doubling rectification. Thus, according to the power converter circuit 15 of Fig. 3, it is possible to improve the entire efficiency of the electromechanical apparatus 1 by performing the voltage doubling rectification.

As described above, the power converter circuit 15 may temporarily store the electric power generated by the generator 13, in the power storage circuit 32, and when the stored electric energy of the power storage circuit 32 reaches a predetermined threshold sufficient to operate the load device 21, the power converter circuit 15 may supply the electric power stored in the power storage circuit 32, to the load device 21. In addition, when the control circuit 33 is omitted, the power converter circuit 15 may supply the electric power generated by the generator 13, to the load device 21, in real time.

### [Operation of Electromechanical Apparatus]

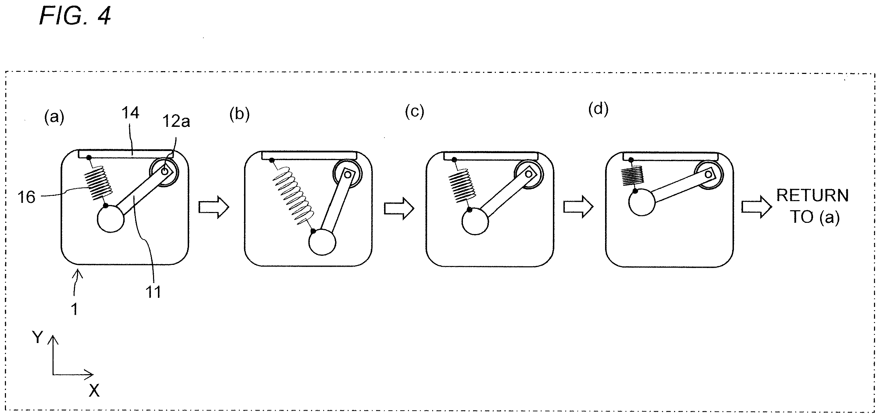

Next, with reference to Figs. 4 to 7, we explain the operation of the electromechanical apparatus 1 of Fig. 1.

Fig. 4 is a diagram for explaining the operation of the electromechanical apparatus 1 of Fig. 1. The pendulum 11 swings about the input shaft 12a of the gear mechanism 12, as shown in Figs. 4(a) to 4(d), in response to shaking of the electromechanical apparatus 1 in the horizontal direction (X direction) and/or the vertical direction (Y direction). In the cases of Figs. 4(a) and 4(c), the pendulum 11 is at the position of the steady state. In addition, referring to the case of Fig. 4(b), the elastic body 16 is extended from the steady state, and generates a restoring force so as to return the pendulum 11 to the position of the steady state. In addition, referring to the case of Fig. 4(d), the elastic body 16 is compressed from the steady state, and generates a restoring force so as to return the pendulum 11 to the position of the steady state. Therefore, the pendulum 11 swings about the input shaft 12a of the gear mechanism 12 in response to the shaking of the whole of the electromechanical apparatus 1, or in response to the restoring force of the elastic body 16.

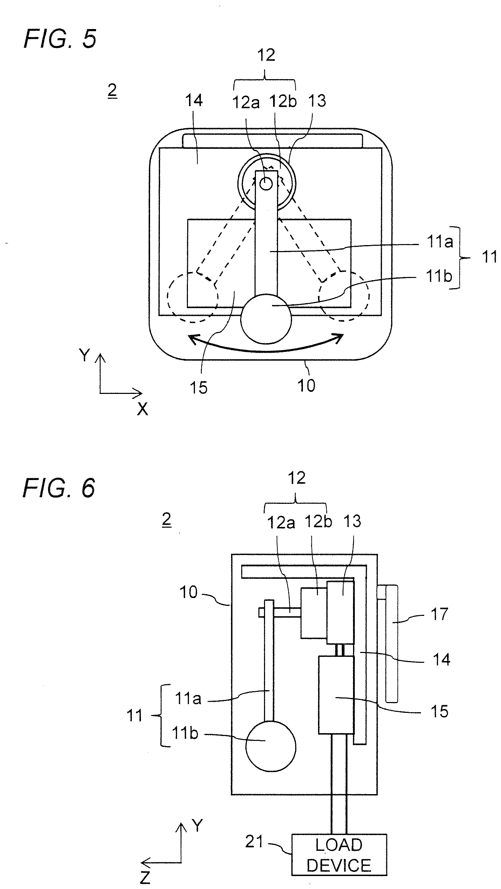

Fig. 5 is a front view showing a configuration of an electromechanical apparatus 2 according to a comparison example. Fig. 6 is a side view showing the configuration of the electromechanical apparatus 2 of Fig. 5. The electromechanical apparatus 2 is substantially configured by removing the elastic body 16 from the electromechanical apparatus 1 of Fig. 1. The pendulum 11 of the electromechanical apparatus 2 swings about the input shaft 12a of the gear mechanism 12 mainly in response to shaking of the electromechanical apparatus 2 in the horizontal direction.

Comparing the electromechanical apparatus 1 according to the embodiment, with the electromechanical apparatus 2 according to the comparison example, since the pendulum 11 of the electromechanical apparatus 1 is connected to the elastic body 16, the pendulum 11 well swings about the input shaft 12a in response to the shaking of the electromechanical apparatus 1 in the vertical direction. Therefore, the electromechanical apparatus 1 according to the embodiment can effectively generate electric power from shaking, swinging, impacting, and the like of the electromechanical apparatus 1, including direction components other than the horizontal direction.

For example, when the user walks, not only horizontal shaking action occurs, but also vertical shaking action occurs. According to the electromechanical apparatus 1 of the embodiment, the pendulum 11 moves not only in response to the shaking of the electromechanical apparatus 1 in the horizontal direction, but also in response to the shaking of the electromechanical apparatus 1 in the vertical direction. Therefore, according to the electromechanical apparatus 1 of the embodiment, it is possible to increase the number of directions of the force acting on the movement of the pendulum 11, that is, the opportunity to generate electric power, as compared with the electromechanical apparatus 2 of the comparison example, and as a result, it is possible to increase electric power and electric energy to be generated. According to the electromechanical apparatus 1 of the embodiment, it is possible to effectively generate electric power, for example, from stepping actions in the same spot, or from daily actions in the up-down direction, such as "standing up" or "sitting down".

The pendulum 11 can move not only in response to a force in a direction orthogonal to a line passing through the input shaft 12a of the gear mechanism 12 and the bob 11b, but also in response to a force in an oblique direction, and such a force in the oblique direction can also contribute to power generation. In other words, the pendulum 11 can move in response to a force of any directional component within a plane perpendicular to the input shaft 12a (XY plane in Fig. 1).

Since the pendulum 11 is movable in response to the force of various directional components, the electromechanical apparatus 1 may be disposed in various postures, not limited to the posture of Figs. 1 and 2.

The bob 11b of the pendulum 11 receives a force from acceleration and deceleration due to movement, such as walking or a posture change of a human, to obtain kinetic energy. The kinetic energy of the bob 11b is converted into the potential energy of gravity applied to the bob 11b, as changes in position and angle of the bob 11b, and the potential energy is re-converted into the kinetic energy. In addition, since the electromechanical apparatus 1 is provided with the elastic body 16, the kinetic energy and the potential energy of the bob 11b are also converted into the elastic energy of the elastic body 16, and the elastic energy of the elastic body 16 is re-converted into the kinetic energy and the potential energy of the bob 11b. The pendulum 11 swings while repeating conversion among the kinetic energy, the potential energy, and the elastic energy, and the electric power is continuously generated. When acceleration and deceleration are periodically repeated, the electric power can be continuously generated for a long time. In this case, if the specification of the elastic body 16 is set such that the natural period of the elastic body 16 is equal to the period of the pendulum 11, the pendulum 11 and the elastic body 16 effectively resonate, and it is possible to effectively generate electric power.

In this case, the period of the pendulum 11 is determined in consideration of a mechanical load of the gear mechanism 12, and an electrical load of the generator 13 and subsequent circuits (that is, the power converter circuit 15 and the load device 21). Therefore, the period of the pendulum 11 is measured when the generator 13 is connected the load device 21, and the elastic body 16 has the natural period equal to the period of the pendulum 11 observed when the generator 13 is connected to the load device 21.

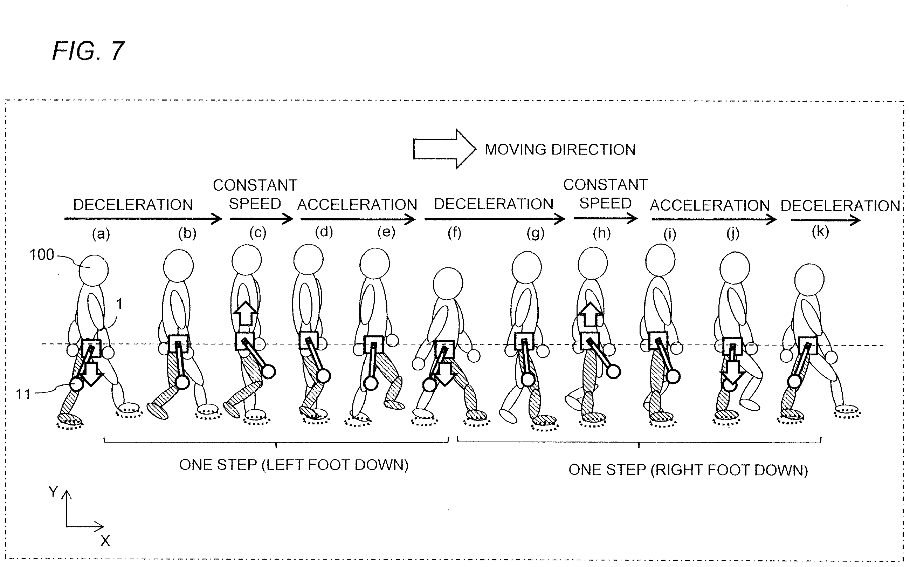

Fig. 7 is a diagram for explaining a relationship between walking of a user 100 and the pendulum 11 of the electromechanical apparatus 1 of Fig. 1. The example of Fig. 7 shows a case where the electromechanical apparatus 1 is attached to the side of the waist of the user 100, and electric power is generated by walking of the user 100. Figs. 7(a) to 7(k) show the pendulum 11 so as to be enlarged and exposed outside the electromechanical apparatus 1, and show the right leg of the user 100 by hatching, for illustration purpose. In general, it is considered that walking is repetition of an acceleration period, a deceleration period, and a constant-speed period. In this case, when the feet of the user 100 and the pendulum 11 are at the positions of Figs. 7(a) to 7(k), it is considered that the electric power can be most effectively generated from the walking of the user 100. Therefore, the electromechanical apparatus 1 is configured such that the period of the pendulum 11, the natural period of the elastic body 16, and the period of acceleration and deceleration of the walking user 100 are the same with each other.

Note that the natural period of the elastic body 16 is not necessarily completely the same with the period of the pendulum 11, and it is possible to generate practically sufficient electric power as long as the natural period has a value near the period of the pendulum 11.

As described above, when a movable object repeats acceleration and deceleration, the gravity as well as the inertial forces due to acceleration and deceleration act on the bob 11b of the electromechanical apparatus 1. The torque generated by these forces is transmitted to the gear mechanism 12 and the generator 13 via the arm 11a, and the generator 13 repeats forward rotation and reverse rotation. It is possible to continuously generate the torque that rotates the gear mechanism 12 and the generator 13, so that the generator 13 repeats forward rotation and reverse rotation, and therefore, it is possible to continuously operate the load device 21 and/or store large electrical energy.

In addition, when the electromechanical apparatus 1 is attached to the body of the user 100, the electromechanical apparatus 1 can continuously and stably generate electric power through the continuous actions of the user 100, such as walking. The electromechanical apparatus 1 can generate electric power of several tens of mW to several W or more, and generate energy of several J to about 10000 J through walking for several minutes to several hours in commute, shopping, or the like. For example, when the user 100 wears the electromechanical apparatus 1 that generates 1 W of electric power, and the user 100 walks for 2 hours, it is possible to generate 1 W x 2 hours x 60 minutes x 60 seconds = 7200 J, that is, energy of 1718 cal. This energy can heat 23 cc of water at 25 degrees to 100 degrees. When the electromechanical apparatus 1 prototyped by the present inventor is attached to the body of the user 100, it is possible to generate energy for turning on an LED flashlight for several seconds to several tens of seconds through walking for several seconds.

In addition, when the electromechanical apparatus 1 is attached to the body of the user 100, the electromechanical apparatus 1 can generate electric power from a short-term action (for example, an instantaneous action) or a small action of the user 100, such as turning, standing up/sitting down, raising and lowering limbs, and rolling over. The electromechanical apparatus 1 can generate electric power sufficient to operate a circuit having a small power consumption, such as a sensor and/or a wireless communication device, for example, electric power of tens of mW to several W, even from a short-term action or a small action of the user 100.

In general, movement including rapid acceleration and deceleration (for example, running) can easily generate sufficient electric power to operate the load device, even when some energy is wasted. On the other hand, in order to generate electric power from daily activities of a user not including rapid acceleration and deceleration, a highly efficient power generation system is required. Each embodiment of the present disclosure provides a power generation system sufficiently useful even in slow walking of a user, and normal walking of a user during, e.g., commute. The phrase "a power generation system sufficiently useful" means that, for example, the system can reasonably generate electric power corresponding to the brightness of an LED flashlight carried by a user when walking at night. If electric power equivalent to consumed power of the LED flashlight can be generated, it is considered that a typical communication circuit, sensor circuit, or the like can sufficiently operate. The word "reasonably" means that the power generation system does not require the conscious and excessive movement of the user for generating electric power, nor result in discomfort in wearing the system. Thus, it is possible to implement a small and lightweight wearable power generation system.

Since the electromechanical apparatus 1 is provided with the housing 10, the pendulum 11 is not in contact with a garment of a user 100, body (e.g., a hand), and/or the like, and therefore, the swinging of the pendulum 11 can continue without interference while the movable object is moving. For example, when the electromechanical apparatus 1 is attached to a belt or a garment of a user 100, the swinging of the pendulum 11 is not interfered even when the user 100 further wears a jacket or the like over the electromechanical apparatus 1. In addition, also when the electromechanical apparatus 1 is inserted into a pocket or the like, the swinging of the pendulum 11 is not interfered. Therefore, it is possible to continuously and unconsciously extract electric power from daily activities of a user 100, such as walking, turning, standing up/sitting down, raising and lowering limbs, and rolling over. Since electric power is continuously generated without interference while the movable object is moving, it is possible to extract relatively large electric power from the daily activities of the user 100.

According to the electromechanical apparatus 1 of the first embodiment, it is possible to continuously and unconsciously extract larger electric power than that of the prior art, from the user's daily activities and the like, at more opportunities than that of the prior art, while being able to be arranged in various postures.

### [Use Examples of Electromechanical Apparatus]

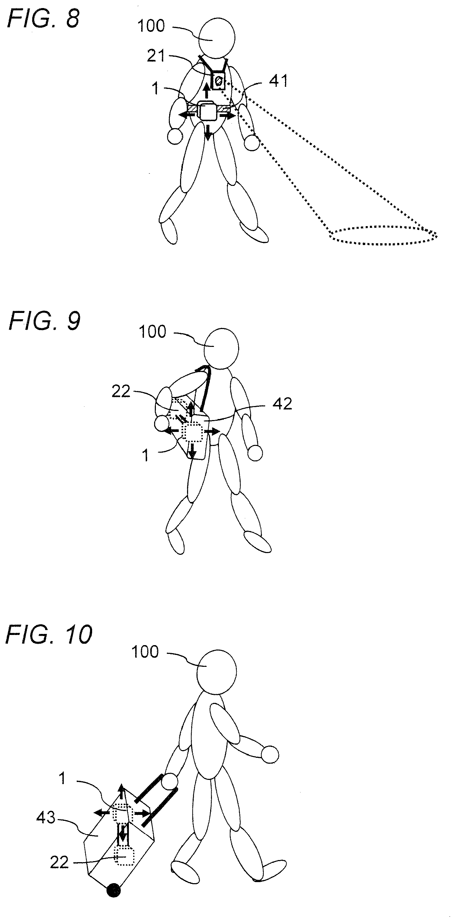

Fig. 8 is a diagram showing a first use example of the electromechanical apparatus 1 of Fig. 1. The electromechanical apparatus 1 may be configured to be attachable to the body of the user 100. The generator 13 generates electric power in response to the movement of the body of the user 100. As shown in Fig. 8, the electromechanical apparatus 1 may be attached to a belt 41 wound around the body of the user 100, for example, using the faster 17. The belt 41 may be wound around, for example, a torso (waist or the like), an upper arm, a front arm, a wrist, an upper leg, a lower leg, an ankle, or the like of the user 100. In addition, the belt 41 may be provided to the electromechanical apparatus 1, instead of the faster 17 of Fig. 1. As described above, by attaching the electromechanical apparatus 1 to the belt 41, the garment, or the like directly attached to the user 100, it is possible to easily and reasonably generate electric power in response to the movement of the body of the user 100.

In addition, the example of Fig. 8 shows a case where the load device 21 is a lighting device. With such a configuration, for example, when the user 100 walks at night, it is possible to ensure safety of walking, by generating electric power from swinging of the body of the user 100 in the front-rear and up-down directions, due to walking, and supplying the generated electric power to the lighting device in real time to turn on the lighting device.

Fig. 9 is a diagram showing a second use example of the electromechanical apparatus 1 of Fig. 1. Fig. 10 is a diagram showing a third use example of the electromechanical apparatus 1 of Fig. 1. The electromechanical apparatus 1 may be configured to be attachable to an article attached to or held by the user 100. The generator 13 generates electric power in response to movement of the article. For example, the electromechanical apparatus 1 may be inserted into a shoulder bag 42, as shown in Fig. 9, or may be inserted into a trunk 43 with casters, as shown in Fig. 10. In addition, the electromechanical apparatus 1 may be attached outside the bag 42 and the trunk 43, using the faster 17. In addition, the electromechanical apparatus 1 may be attached to a handbag, a knapsack, a suitcase, a shopping cart, or the like. The movement of the body of the user 100 also causes movement of the article held or used by the user 100. Therefore, by attaching the electromechanical apparatus 1 to the article indirectly used by the user 100, it is possible to easily and reasonably generate electric power in response to the movement of the body of the user 100.

In addition, the examples of Figs. 9 and 10 show a case where the electromechanical apparatus 1 is connected to a rechargeable battery 22 as a load device. With such a configuration, referring to the example of Fig. 9, for example, when the user 100 walks during commute, swinging of the body of the user 100 in the front-rear and up-down directions due to walking is transmitted to the bag 42, and it is possible to effectively generate electric power using the swinging of the bag 42. In addition, referring to the example of Fig. 10, for example, when the user 100 walks during travel or commute, swinging of the trunk 43 due to a rough or stepped road surface or due to walking is transmitted to the trunk 43, and it is possible to effectively generate electric power using the swinging of the trunk 43. According to the examples of Figs. 9 and 10, the electromechanical apparatus 1 can charge the battery 22 of a mobile phone or the like.

According to the electromechanical apparatus 1, since the force for swinging the pendulum 11 can be obtained from the body of the user 100, it is possible to reliably generate electric power when the body of the user 100 moves. The electromechanical apparatus 1 can generate electric power from continuous movement of the body of the user 100, or from short-term and temporary movement of the body of the user 100.

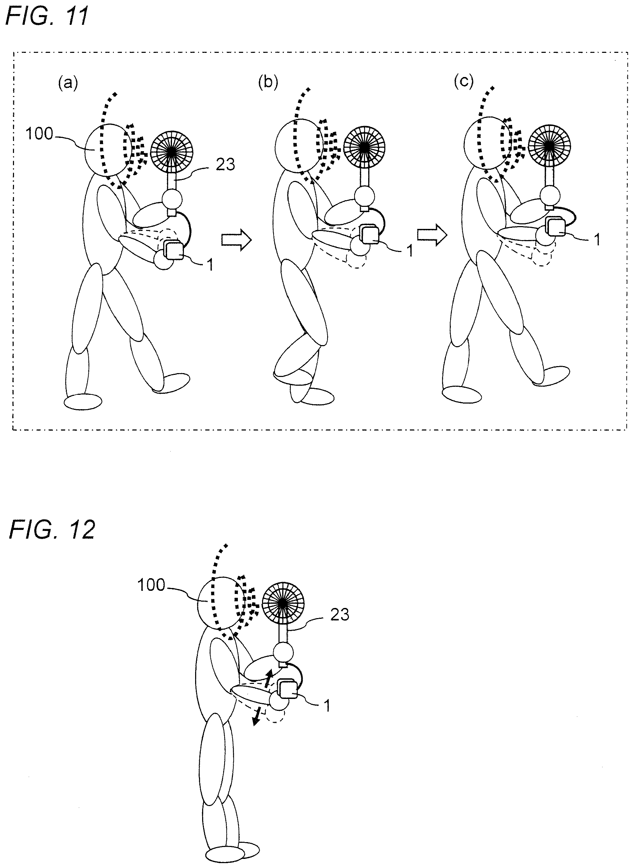

Fig. 11 is a fourth use example of the electromechanical apparatus 1 of Fig. 1, and is a diagram for explaining power generation when the user 100 is walking. Fig. 12 is the fourth use example of the electromechanical apparatus 1 of Fig. 1, and is a diagram for explaining power generation when the user 100 is stopping. The example of Figs. 11 and 12 shows a case where the electromechanical apparatus 1 is connected to a portable electric fan 23 as a load device. For example, the user 100 places the electromechanical apparatus 1 on the palm of the right hand, and holds the electric fan 23 by the left hand.

The electromechanical apparatus 1 is configured to be held by one hand of the user 100. The electromechanical apparatus 1 can be configured with, for example, a weight of several tens of grams to several hundreds of grams, and a size of about 2 cm to 30 cm. When placed on one hand, preferably, the electromechanical apparatus 1 may be configured with, for example, a size of about 5 cm to 10 cm. Even with such a weight and size, the electromechanical apparatus 1 can generate sufficient electric power to operate a desired load device.

Referring to the example of Figs. 11 and 12, the generator 13 of the electromechanical apparatus 1 generates electric power in response to movement of one hand having any directional component within a plane perpendicular to the input shaft 12a. Referring to the example of Figs. 11(a) to 11(c), the palm of the right hand is gently and naturally moved up and down in accordance with the rhythm of up-down swinging involved in walking of the user 100, and the electromechanical apparatus 1 can reasonably generate electric power using the movement of the hand. On the other hand, referring to the example of Fig. 12, even when the user 100 is stopping, the user 100 can generate electric power by gently swinging the electromechanical apparatus 1 in various directions, such as the front-rear direction, the up-down direction, and the direction along the circumference.

The electromechanical apparatus 1 can supply the electric power generated by the generator 13 to a motor of the electric fan 23 in real time to drive the motor. In addition, the electromechanical apparatus 1 may temporarily store the electric power generated by the generator 13, in the power storage circuit 32, and supply the electric power from the power storage circuit 32 to the motor of the electric fan 23 to drive the motor. According to the electromechanical apparatus 1, since relatively large electric power can be reasonably generated by gentle actions of one hand, it is also possible to drive a load device that requires a large starting current, such as a motor. Therefore, the electromechanical apparatus 1 can also directly drive, for example, the motor of the electric fan 23 without a battery. By gently swinging the hand holding the electromechanical apparatus 1 in accordance with the walking of the user 100, it is possible to continuously and unconsciously generate wind without feeling of effort. In addition, even when the user 100 is stopping, it is possible to continuously generate wind by swinging the hand holding the electromechanical apparatus 1.

Since the electromechanical apparatus 1 can effectively generate electric power only by movement of one hand, even when the body of the user 100 is not moving much, the electromechanical apparatus 1 can continuously generate electric power by actively and gently swinging the generator device, with the generator device being placed on the palm of one hand, suspended, or appended with one hand, as necessary. The stronger the electromechanical apparatus 1 is swung, the larger the generated electric power and electric energy (or stored electric energy) increase. Thus, as necessary, it is possible to easily generate electric power using the electromechanical apparatus 1.

In addition, the electromechanical apparatus 1 may supply electric power to the load device 21 including, for example, a sensor that measures biological information, such as pulse, respiration, body temperature, and/or blood pressure of the user 100. In this case, the electromechanical apparatus 1 may operate the load device 21 so as to measure the pulse, respiration, blood pressure, and/or the like of the user 100 in real time, for example, when the user 100 is walking, and if necessary, so as to notify other apparatuses of the measurement results. As a result, it is possible to manage the physical conditions of the user 100.

In addition, the electromechanical apparatus 1 may supply electric power to the load device 21 including, for example, a wireless communication device or the like capable of receiving GPS signals. In this case, the electromechanical apparatus 1 can operate the load device 21 so as to continuously or periodically obtain the position information of the user 100.

In addition, the electromechanical apparatus 1 may supply electric power to the load device 21 including, for example, a wireless communication device capable of transmitting polling signals to a home receiver of the user 100. In this case, the home receiver may notify a relative or the like of the user 100, who lives in a remote location, of the conditions of the user 100.

### [Modified Embodiments of First Embodiment]

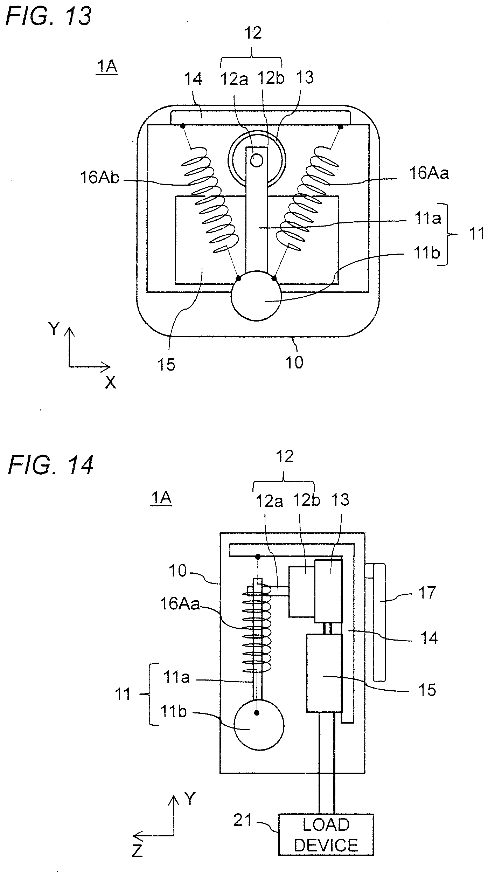

Fig. 13 is a front view showing a configuration of an electromechanical apparatus 1A according to a first modified embodiment of the first embodiment. Fig. 14 is a side view showing the configuration of the electromechanical apparatus 1A of Fig. 13. The electromechanical apparatus 1A is provided with, instead of the elastic body 16 of Fig. 1, a pair of elastic bodies 16Aa and 16Ab connected to both sides of the pendulum 11.

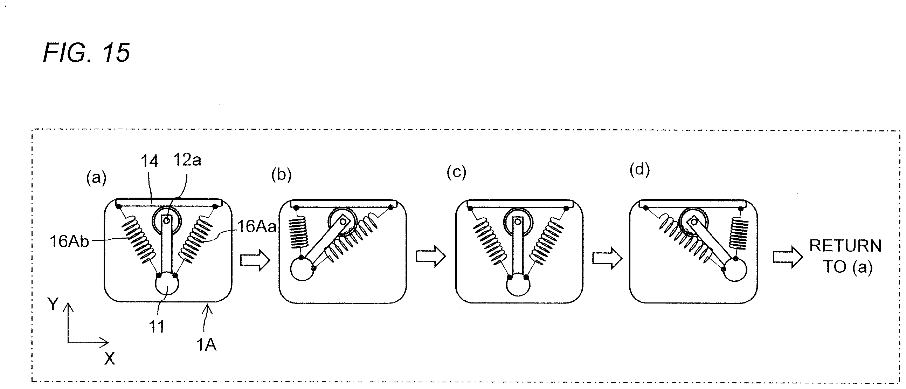

Fig. 15 is a diagram for explaining a first operation example of the electromechanical apparatus 1A of Fig. 13. As shown in Figs. 15(a) to 15(d), the pendulum 11 swings about the input shaft 12a of the gear mechanism 12, in response to swinging of the electromechanical apparatus 1A in the horizontal direction (X direction) and/or in the vertical direction (Y direction). Referring to the case of Figs. 15(a) and 15(c), the pendulum 11 is at the position of the steady state. In addition, referring to the case of Fig. 15(b), the elastic body 16Aa is extended from the steady state, and the elastic body 16Ab is compressed from the steady state, and they generate restoring forces so as to return the pendulum 11 to the position of the steady state. In addition, referring to the case of Fig. 15(d), the elastic body 16Aa is compressed from the steady state, and the elastic body 16Ab is extended from the steady state, and they generate restoring forces so as to return the pendulum 11 to the position of the steady state. Therefore, the pendulum 11 swings about the input shaft 12a of the gear mechanism 12 in response to shaking of a whole of the electromechanical apparatus 1A, or in response to the restoring force of the elastic body 16.

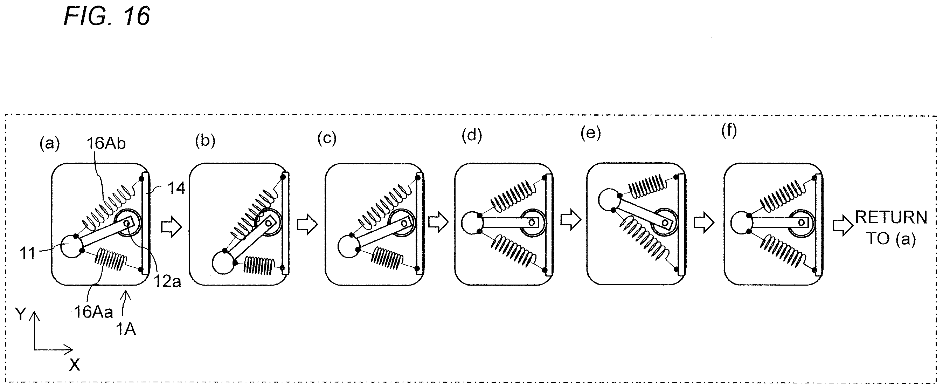

Fig. 16 is a diagram for explaining a second operation example of the electromechanical apparatus 1A of Fig. 13. In the case of Fig. 16, the electromechanical apparatus 1A is rotated by 90 degrees from the case of Fig. 15. As shown in Figs. 16(a) to 16(f) the pendulum 11 swings about the input shaft 12a of the gear mechanism 12, in response to swinging of the electromechanical apparatus 1A in the horizontal direction (X direction) and/or in the vertical direction (Y direction). Referring to the case of Figs. 16(a) and 16(c), the weight of the pendulum 11 is balanced with the restoring forces of the elastic bodies 16Aa and 16Ab, and the pendulum 11 is at the position of the steady state. In addition, referring to the case of Fig. 16(b), the elastic body 16Aa is compressed from the steady state, and the elastic body 16Ab is extended from the steady state, and they generate restoring forces so as to return the pendulum 11 to the position of the steady state. In addition, referring to the case of Fig. 16(e), the elastic body 16Aa is extended from the steady state, and the elastic body 16Ab is compressed from the steady state, and they generate restoring forces so as to return the pendulum 11 to the position of the steady state. In addition, referring to the case of Figs. 16(d) and 16(f), the elastic bodies 16Aa and 16Ab do not generate a restoring force, but the pendulum 11 is attracted by gravity, and tends to return to the position of the steady state. Therefore, the pendulum 11 swings about the input shaft 12a of the gear mechanism 12 in response to shaking of a whole of the electromechanical apparatus 1A, or in response to the restoring force of the elastic body 16.

According to the electromechanical apparatus 1A, since the pair of elastic bodies 16Aa and 16Ab are provided, the electromechanical apparatus 1A can be arranged with a higher degree of freedom in terms of posture, than that of the electromechanical apparatus 1 of Fig. 1.

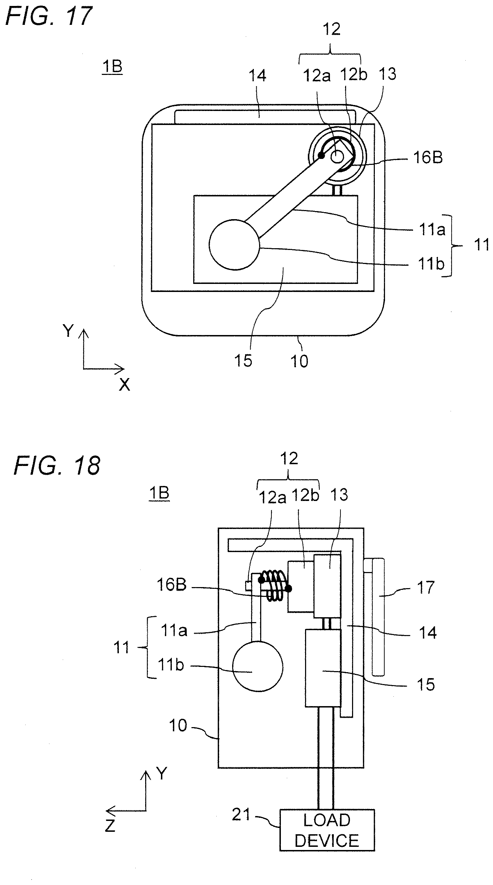

Fig. 17 is a front view showing a configuration of an electromechanical apparatus 1B according to a second modified embodiment of the first embodiment. Fig. 18 is a side view showing the configuration of the electromechanical apparatus 1B of Fig. 17. The electromechanical apparatus 1B is provided with an elastic body 16B as a torsion spring, instead of the elastic body 16 of Fig. 1 as a coil spring.

The elastic body 16B is provided around the input shaft 12a of the gear mechanism 12. One end of the elastic body 16B is connected to the pendulum 11, and the other end thereof is connected to the housing 12b of the gear mechanism 12. Since the gear mechanism 12 is provided at a fixed position relative to the frame 14, the elastic body 16B is indirectly connected to the frame 14 by being connected to the housing 12b of the gear mechanism 12.

According to the electromechanical apparatus 1B, it is possible to continuously and unconsciously extract larger electric power than that of the prior art, from the user's daily activities and the like, at more opportunities than that of the prior art, while being able to be arranged in various postures, in a manner similar to that of the electromechanical apparatus 1 of Fig. 1.

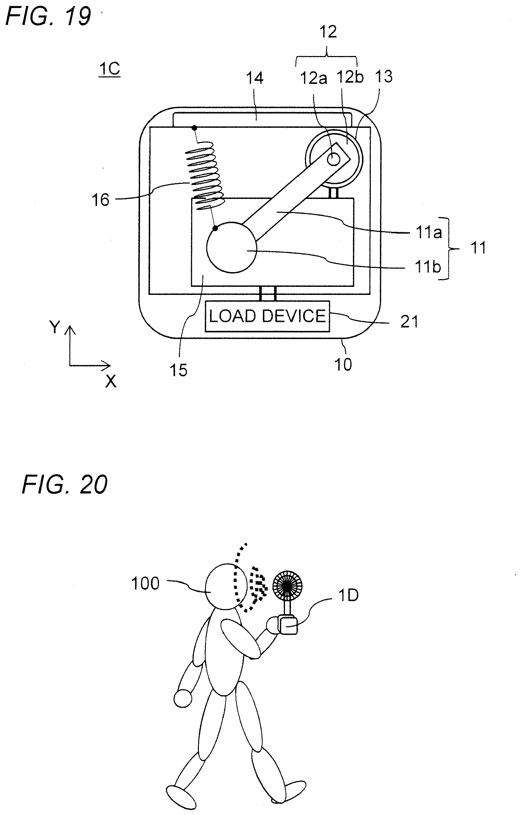

Fig. 19 is a front view showing a configuration of an electromechanical apparatus 1C according to a third modified embodiment of the first embodiment. The electromechanical apparatus 1C may be further provided with the load device 21, in addition to the components of the electromechanical apparatus 1 of Fig. 1. Integrating the electromechanical apparatus 1C with the load device 21 results in improved convenience.

Fig. 20 is a front view showing a configuration of an electromechanical apparatus 1D according to a fourth modified embodiment of the first embodiment. The electromechanical apparatus 1D is configured to integrate the electromechanical apparatus 1 and the electric fan 23 of Figs. 11 and 12 with each other. In a manner similar to that of the electromechanical apparatus 1 of Figs. 11 and 12, the electromechanical apparatus 1D can generate electric power by gently moving the arm in accordance with the rhythm of swinging involved in walking of the user 100, and even when the user 100 is stopping, the user 100 can continue to generate electric power by swinging the electromechanical apparatus 1.

The electromechanical apparatus according to the embodiment can be incorporated with not only the electric fan 23, but also any load devices.

### [Other Use Examples of Electromechanical Apparatus]

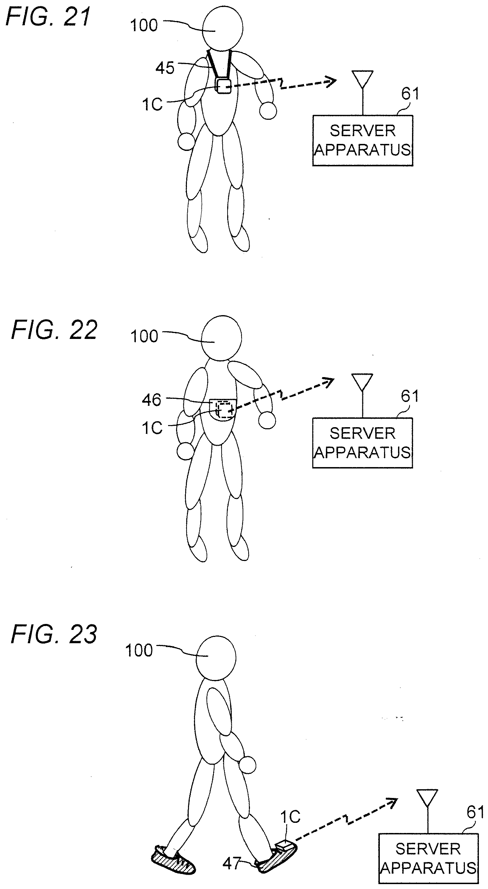

Next, with reference to Figs. 21 to 35, we explain further use examples of the electromechanical apparatus according to the first embodiment.

The examples of Figs. 21 to 33 show cases where the load device 21 of the electromechanical apparatus 1C is a wireless communication device, and when the electromechanical apparatus 1C generates electric power, the wireless communication device communicates with an external server apparatus 61 using the generated electric power. The server apparatus 61 is provided, for example, in a home of the user 100, a hospital, other facilities, or the like. The wireless communication device transmits, for example, a wireless signal including a polling signal or other signals (for example, a detection signal of a sensor that measures pulse or respiration of the user 100), to the server apparatus 61.

Fig. 21 is a diagram showing a first use example of the electromechanical apparatus 1C of Fig. 19. Fig. 22 is a diagram showing a second use example of the electromechanical apparatus 1C of Fig. 19. Fig. 23 is a diagram showing a third use example of the electromechanical apparatus 1C of Fig. 19. Referring to the example of Fig. 21, the electromechanical apparatus 1C is suspended from a part of the body of the user 100 (for example, neck, shoulder, or the like), for example, using a strap 45. Referring to the example of Fig. 22, the electromechanical apparatus 1C is inserted into, for example, a pocket 46 of a garment. In addition, the electromechanical apparatus 1C may be attached to a garment using, for example, a safety pin. Referring to the example of Fig. 23, the electromechanical apparatus 1C is attached to a shoe 47 using, for example, the faster 17 or a shoelace. According to the examples of Figs. 21 to 23, swinging of the body of the user 100 in the front-rear, left-right, and up-down directions due to walking or the like is transmitted to the electromechanical apparatus 1C, and it is possible to effectively generate electric power using the swinging of the electromechanical apparatus 1C.

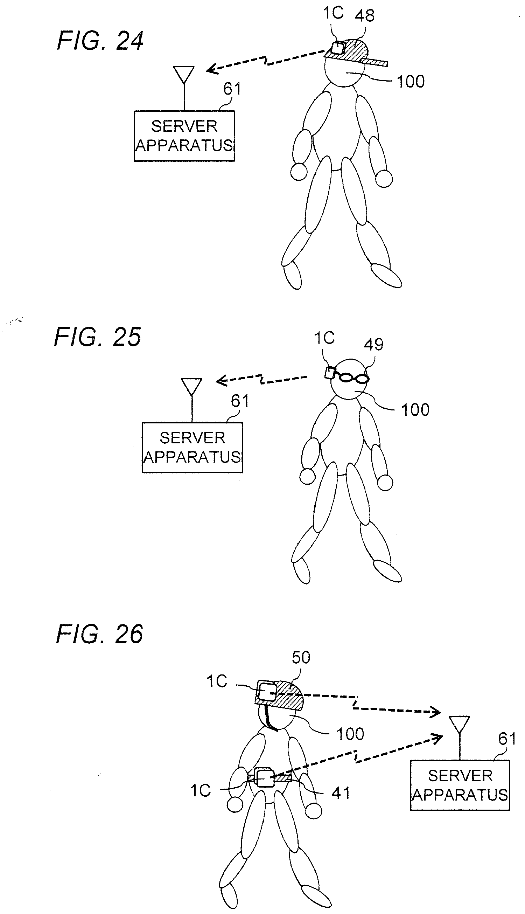

Fig. 24 is a diagram showing a fourth use example of the electromechanical apparatus 1C of Fig. 19. Fig. 25 is a diagram showing a fifth use example of the electromechanical apparatus 1C of Fig. 19. Referring to the example of Fig. 24, the electromechanical apparatus 1C is attached to, for example, a cap 48. In addition, referring to the example of Fig. 25, the electromechanical apparatus 1C is attached to, for example, glasses 49. According to the examples of Figs. 24 and 25, during outing or other daily activities, swinging of the head of the user 100 in the front-rear, left-right, and up-down directions due to walking or looking around is transmitted to the electromechanical apparatus 1C, and it is possible to effectively generate electric power using the swinging of the electromechanical apparatus 1C.

Fig. 26 is a diagram showing a sixth use example of the electromechanical apparatus 1C of Fig. 19. Referring to the example of Fig. 26, the electromechanical apparatus 1C is attached to, for example, the belt 41 or a helmet 50. According to the example of Fig. 26, during work at a construction site or the like, swinging of the body of the user 100 in the front-rear, left-right, and up-down directions is transmitted to the electromechanical apparatus 1C, and it is possible to effectively generate electric power using the swinging of the electromechanical apparatus 1C. The wireless communication device of the electromechanical apparatus 1C can notify the server apparatus 61 of, for example, information on the user 100, or information on the work.

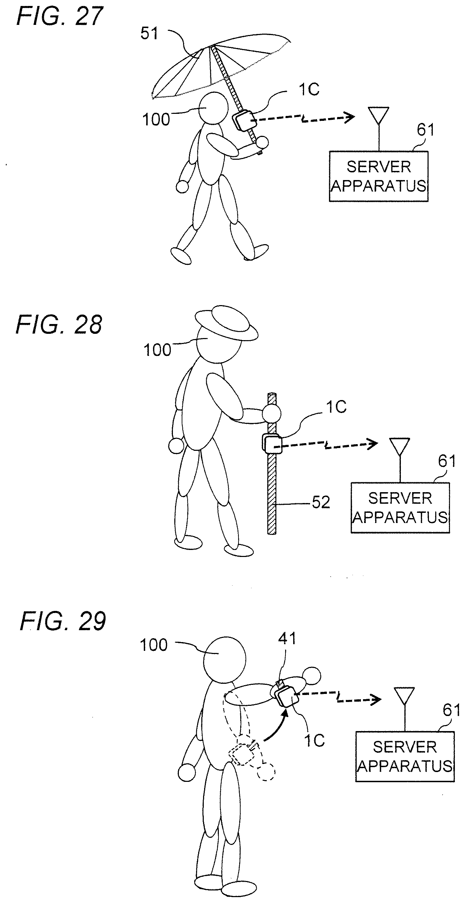

Fig. 27 is a diagram showing a seventh use example of the electromechanical apparatus 1C of Fig. 19. Fig. 28 is a diagram showing an eighth use example of the electromechanical apparatus 1C of Fig. 19. Referring to the example of Fig. 27, the electromechanical apparatus 1C is attached to, for example, an umbrella 51. According to the example of Fig. 27, during daily activities of the user 100, swinging of the umbrella 51 due to walking of the user 100 is transmitted to the electromechanical apparatus 1C, and it is possible to effectively generate electric power using the swinging of the electromechanical apparatus 1C. Even when the user 100 is stopping, the user 100 can continuously generate electric power by gently swinging the umbrella 51 in the up-down direction or the like. In addition, referring to the example of Fig. 28, the electromechanical apparatus 1C is attached to, for example, a stick 52. According to the example of Fig. 28, during outing, for example, in order to keep watching, swinging of the stick 52 due to walking of the user 100 is transmitted to the electromechanical apparatus 1C, and it is possible to effectively generate electric power using the swinging of the electromechanical apparatus 1C. Even when the user 100 is stopping, the user 100 can continuously generate electric power by gently swinging the stick 52 in the up-down direction or the like.

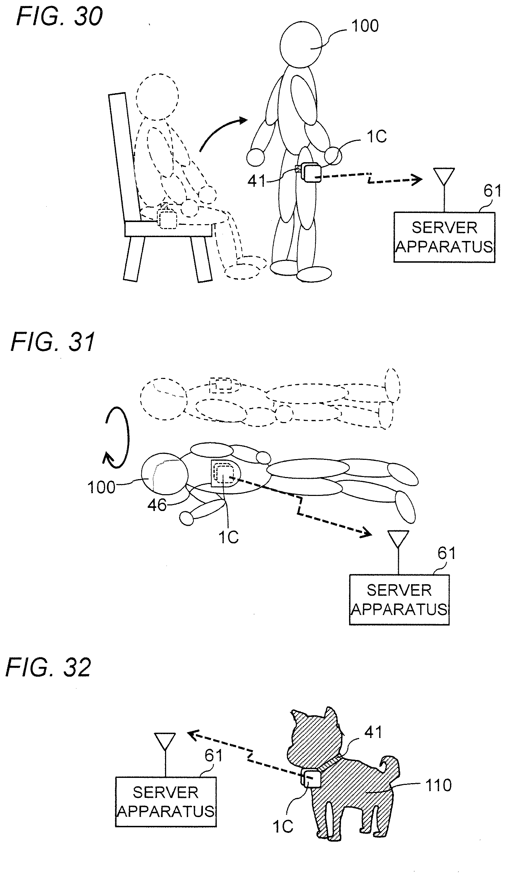

Fig. 29 is a diagram showing a ninth use example of the electromechanical apparatus 1C of Fig. 19. Fig. 30 is a diagram showing a tenth use example of the electromechanical apparatus 1C of Fig. 19. Fig. 31 is a diagram showing an eleventh use example of the electromechanical apparatus 1C of Fig. 19. Referring to the examples of Figs. 29 and 30, the electromechanical apparatus 1C is attached to the body of the user 100 using the belt 41. Referring to the example of Fig. 31, the electromechanical apparatus 1C is inserted into the pocket 46 provided in a garment of the user 100. The electromechanical apparatus 1C generates electric power in response to raising and lowering of limbs (Fig. 29), standing-up/sitting-down actions (Fig. 30), rolling over (Fig. 31), and the like, to operate the load device 21 so as to transmit a wireless signal including a polling signal or other signals, to the server apparatus 61. The swinging of the user 100 due to a short-term and temporary action is transmitted to the electromechanical apparatus 1C, and it is possible to effectively generate electric power using the swinging of the electromechanical apparatus 1C. The electromechanical apparatus 1C stores electric power in the power storage circuit 32 through one cycle of power generation, or through several cycles of repetitive power generation, and when the stored electric power of the power storage circuit 32 reaches a predetermined threshold sufficient to operate the load device 21, the electromechanical apparatus 1C supplies the electric power stored in the power storage circuit 32, to the load device 21. Thus, for example, it is possible to monitor (watch) conditions of the user 100.

As described above, the electromechanical apparatus 1 may be configured to be attachable to the body of the user 100 or an animal. In this case, the generator 13 generates electric power in response to the movement of the body of the user 100 or the animal. In addition, the electromechanical apparatus 1 may be configured to be attachable to an article attached to or held by the user 100 or an animal. In this case, the generator 13 generates electric power in response to movement of the article. The movement of the body of the user 100 also results in movement of the article held or used by the user 100. Therefore, by attaching the electromechanical apparatus 1 to an object indirectly used by the user 100, it is possible to easily and reasonably generate electric power in response to the movement of the body of the user 100.

According to the electromechanical apparatus 1C, since the force for swinging the pendulum 11 can be obtained from the body of the user 100, it is possible to reliably generate electric power when the body of the user 100 moves. The electromechanical apparatus 1C can generate electric power from continuous movement of the body of the user 100, or from short-term and temporary movement of the body of the user 100. Therefore, with the generated electric power, it is possible to operate a lighting device or a motor in real time, or charge a battery of a mobile phone and the like.

In addition, the load device 21 may be provided with, for example, a sensor for biological information, a positioning device, a camera, or the like, in addition to the wireless communication device. In this case, the electromechanical apparatus 1C supplies the generated electric power to the load device 21 directly, or after temporarily storing in the power storage circuit 32. Data acquired by the sensor, the positioning device, or the camera is transmitted to the server apparatus 61 by the wireless communication device. The server apparatus 61 can receive data transmitted from the electromechanical apparatus 1C to acquire information, such as presence or absence of a behavior of the user 100, the type of the behavior, position information, and images. Thus, the electromechanical apparatus 1C can be used for watching over an elderly person, preventing an infant from getting lost, and the like.

In addition, the electromechanical apparatus 1C is attachable to not only the garment of the user 100, but also various articles, such as an article held by the user 100, an article carried on the back, and a pulled article. Thus, the movement of the user 100 is transmitted to the electromechanical apparatus 1C via the article, and it is possible to effectively generate electric power using the swinging of the electromechanical apparatus 1C.

Fig. 32 is a diagram showing a twelfth use example of the electromechanical apparatus 1C of Fig. 19. The electromechanical apparatus 1C may be configured to be attachable to the body of an animal 110. In this case, the generator 13 generates electric power in response to the movement of the body of the animal 110. The electromechanical apparatus 1C may be configured to be attachable to an article attached to the animal 110. In this case, the generator 13 generates electric power in response to movement of the article. Referring to the example of Fig. 32, the electromechanical apparatus 1C is attached to the body of the animal 110 using the belt 41. The belt 41 may be, for example, a collar, or a strap worn around the neck.

According to the electromechanical apparatus 1C, since the force for swinging the pendulum 11 can be obtained from the body of the animal 110, it is possible to reliably generate electric power when the body of the animal 110 moves. The electromechanical apparatus 1C can generate electric power from continuous movement of the body of the animal 110, or from short-term and temporary movement of the body of the animal 110. By attaching the electromechanical apparatus 1C to a neck or a back of a pet in a wearable manner, for example, it is possible to turn on a lighting device during a night walk or the like, and to draw attention to other pedestrians or vehicles. In addition, by attaching the electromechanical apparatus 1C to domestic animals to be grazed, it is possible to track the number of domestic animals, their behaviors, their positions, and the like, and manage the domestic animals in a consolidated manner.

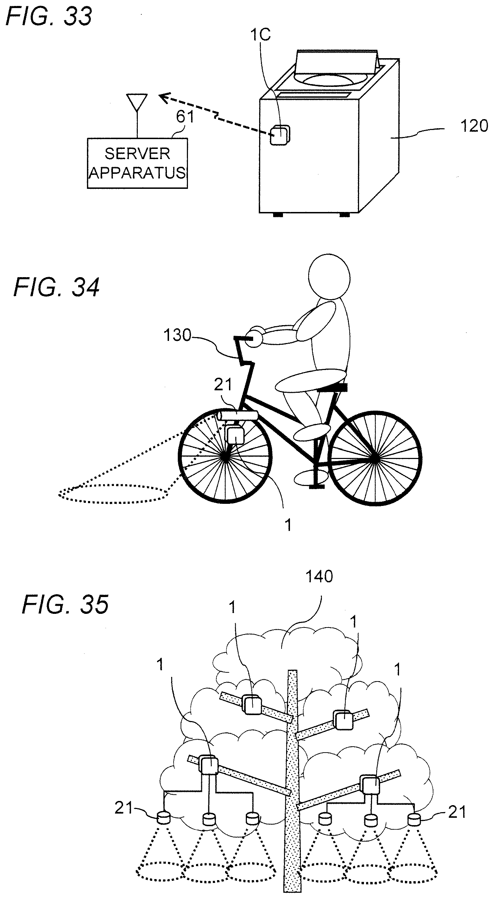

Fig. 33 is a diagram showing a thirteenth use example of the electromechanical apparatus 1C of Fig. 19. Fig. 34 is a diagram showing a fifth use example of the electromechanical apparatus 1 of Fig. 1. The electromechanical apparatuses 1 and 1C may be configured to be attachable to a mechanical device. In this case, the generator 13 generates electric power in response to movement of the mechanical device. The example of Fig. 33 shows a case where the mechanical device is a washing machine 120. Referring to the example of Fig. 33, the electromechanical apparatus 1C is attached to a housing of the washing machine 120 using the faster 17 or other members (for example, a magnet and the like). The example of Fig. 34 shows a case where the mechanical device is a bicycle 130. The example of Fig. 34 shows a case where the electromechanical apparatus 1 and the load device 21, that is a lighting device, are attached to a fork for a front wheel of the bicycle 130, using screws or the like. Further, the electromechanical apparatus 1 may be attached to, for example, a pedal, a crank, a handlebar, or the like of the bicycle 130, instead of the fork.

The electromechanical apparatus 1 or 1C may be attached to a nonhuman-powered movable object. By attaching the electromechanical apparatus 1 or 1C to an object movable with fuel, such as an automobile (for example, interior, engine room, or body) or a train (for example, a hanging strap or the like), a motor-powered mechanical device, a vibrating mechanical device in a factory or the like, or an object movable with other energy, it is possible to easily and reasonably generate electric power. In addition, the electromechanical apparatus 1 or 1C may be attached to a door or a window to be moved by the user 100. Thus, by attaching the electromechanical apparatus 1 or 1C to a vibration or swinging mechanical device, the vibration or swinging is transmitted to the electromechanical apparatus 1 or 1C, and it is possible to effectively generate electric power using the swinging of the electromechanical apparatus 1 or 1C.

Fig. 35 is a diagram showing a sixth use example of the electromechanical apparatus 1 of Fig. 1. The electromechanical apparatus 1 may be configured to be attachable to an article deformed by wind power or hydraulic power. The generator 13 generates electric power in response to movement of the article. Referring to the example of Fig. 35, the electromechanical apparatuses 1 are attached to branches of a tree 140 using the faster 17 or other members (for example, a belt, a strap, or the like). The branches deform and swing in response to wind (wind power) or rain (hydraulic power), the swinging of the branches is transmitted to the electromechanical apparatuses 1, and therefore, it is possible to effectively generate electric power using the swinging of the electromechanical apparatuses 1. The example of Fig. 35 shows a case where the load devices 21 are lighting devices, and the tree is illuminated by turning on the lighting devices with electric power generated when the branches deform and swing by wind or rain.

The electromechanical apparatus 1 is attached to an article or a place that receives wind, raindrops, a water flow, or the like, so as to receive vibration, swinging, or impact due to natural forces, such as wind power or hydraulic power. The electromechanical apparatus 1 may be installed on, for example, a garden tree, a street tree, an eaves, a veranda, or the like, in order to receive wind power to generate electric power. As an auxiliary member for effectively receiving wind power, a plate, a sail, a windsock, or the like may be attached to the electromechanical apparatus 1, and therefore, it is possible to more effectively generate electric power. In addition, the electromechanical apparatus 1 may be installed on, for example, a faucet, a rain gutter, a water channel, or the like, in order to receive hydraulic power to generate electric power. In addition, the electromechanical apparatus 1 may be installed on a building, furniture, other fixtures, or the like, in order to receive a force generated by an earthquake to generate electric power. Thus, the electromechanical apparatus 1 notifies the server apparatus 61 of the occurrence of the earthquake, and the user can recognizes the occurrence of the earthquake, and take a quick and sure action, such as evacuation. As described above, the electromechanical apparatus 1 can be attached to any article that receives vibration, swinging, or impact from some force, and can effectively generate electric power using the swinging transmitted from the article.

The electromechanical apparatuses 1 and 1C described with reference to Figs. 21 to 35 can be used to supply electric power to, for example, IoT (Internet of Things) devices as the load device 21.

### [Summary of First Embodiment]

According to the electromechanical apparatus of the first embodiment, the electromechanical apparatus 1 is provided with: a gear mechanism 12, a generator 13, a pendulum 11, a frame 14, and a elastic body 16. The gear mechanism 12 has an input shaft 12a and transmits rotation of the input shaft 12a. The generator 13 generates electric power in response to the rotation transmitted by the gear mechanism 12. The pendulum 11 is connected to the input shaft 12a of the gear mechanism 12. The frame 14 is provided at a fixed position relative to the gear mechanism 12 and the generator 13. The elastic body 16 supports the pendulum 11 with respect to the frame 14 so as to generate a restoring force to a predetermined position. The pendulum 11 swings about the input shaft 12a of the gear mechanism 12 in response to shaking of a whole of the electromechanical apparatus 1, or in response to the restoring force of the elastic body 16, and the generator 13 generates the electric power in response to swinging of the pendulum 11.

With such a configuration, it is possible to continuously and unconsciously extract larger electric power than that of the prior art, from the user's daily activities and the like, at more opportunities than that of the prior art, while being able to be arranged in various postures.

According to the electromechanical apparatus of the first embodiment, the elastic body 16 may be a coil spring that is compressed and extended within a plane including a trajectory of the pendulum 11.

With such a configuration, the pendulum can be supported with respect to the frame so as to generate the restoring force to the predetermined position.

According to the electromechanical apparatus of the first embodiment, the elastic body 16 may be a torsion spring provided around the input shaft 12a of the gear mechanism 12.

With such a configuration, the pendulum can be supported with respect to the frame so as to generate the restoring force to the predetermined position.

According to the electromechanical apparatus of the first embodiment, the elastic body 16 may have a natural period equal to a period of the pendulum 11 observed when the generator 13 is connected to a load device.

With such a configuration, the pendulum and the elastic body effectively resonate, and it is possible to effectively generate electric power.

According to the electromechanical apparatus of the first embodiment, the electromechanical apparatus 1 may be further provided with a load device 21 that operates with the electric power generated by the generator 13.

With such a configuration, integrating the electromechanical apparatus with the load device results in improved convenience.

According to the electromechanical apparatus of the first embodiment, the electromechanical apparatus 1 may supply the electric power generated by the generator 13 to an external load device 21.

With such a configuration, it is possible to improve the degree of freedom in design of the electromechanical apparatus and the load device.

According to the electromechanical apparatus of the first embodiment, the electromechanical apparatus 1 may supply the electric power generated by the generator 13 to the load device 21 in real time.

With such a configuration, it is possible to generate electric power sufficiently large to operate the load device, and therefore, it is possible to operate the load device in real time.

According to the electromechanical apparatus of the first embodiment, the electromechanical apparatus 1 may be further provided with a power storage device 32 that stores the electric power generated by the generator 13. When stored electric energy of the power storage device 32 reaches a predetermined threshold sufficient to operate the load device 21, the electromechanical apparatus 1 supplies the electric power stored in the power storage device 32, to the load device 21.

With such a configuration, even when small electric power is generated, it is possible to accumulate the generated electric power to operate the load device.

According to the electromechanical apparatus of the first embodiment, the load device 21 may include any one of a lighting device, a rechargeable battery, a motor, a sensor, and a wireless communication device.

With such a configuration, it is possible to operate any load device according to the user's needs.

According to the electromechanical apparatus of the first embodiment, the electromechanical apparatus 1 may be configured to be attachable to a body of a user 100 or an animal. The generator 13 generates the electric power in response to movement of the body of the user 100 or the animal.

With such a configuration, it is possible to generate the electric power in response to movement of the body of the user or the animal.

According to the electromechanical apparatus of the first embodiment, the electromechanical apparatus 1 may be configured to be attachable to an article attached to or held by a user 100 or an animal. The generator 13 generates the electric power in response to movement of the article.

With such a configuration, it is possible to generate the electric power in response to movement of the article.

According to the electromechanical apparatus of the first embodiment, the electromechanical apparatus 1 may be configured to be attachable to a mechanical device. The generator 13 generates the electric power in response to movement of the mechanical device.

With such a configuration, it is possible to generate the electric power in response to movement of the mechanical device.

According to the electromechanical apparatus of the first embodiment, the electromechanical apparatus 1 may be configured to be attachable to an article deformed by wind power or hydraulic power. The generator 13 generates the electric power in response to movement of the article.

With such a configuration, it is possible to generate the electric power in response to movement of the article.

According to the electromechanical apparatus of the first embodiment, the electromechanical apparatus 1 may be configured to be held by one hand of a user 100. The generator 13 generates the electric power in response to movement of the one hand having a directional component within a plane perpendicular to the input shaft 12a.

With such a configuration, it is possible to easily generate the electric power using the electromechanical apparatus.

According to the electromechanical apparatus of the first embodiment, since the pendulum 11, the gear mechanism 12, and the generator 13 are combined with the elastic body 16, it is possible to cause the pendulum 11 to swing not only in response to a horizontal force, but also in response to a force of any directional component within a plane perpendicular to the input shaft 12a of the gear mechanism 12. In particular, since it is possible to cause the pendulum 11 to swing in response to a vertical force, it is possible to generate the electric power at more opportunities than that of the prior art. The electromechanical apparatus 1 may be wearable, or may be held in the hand of the user 100, and the like. It is possible to effectively generate large electric power from easy and unconscious actions in daily activities of the user 100.

### SECOND EMBODIMENT

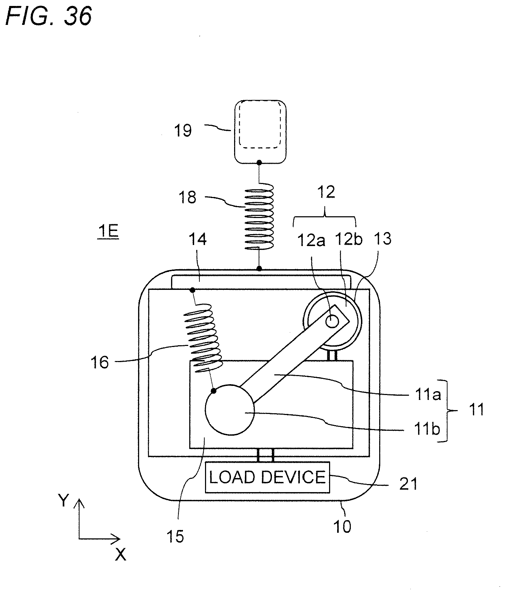

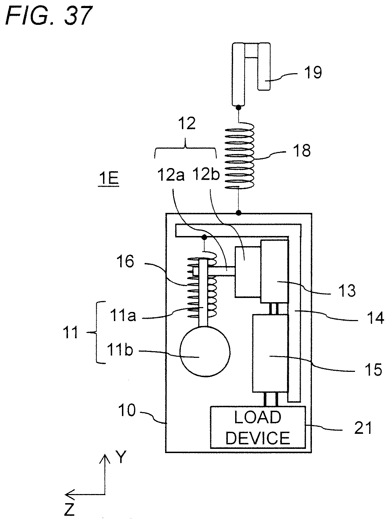

Fig. 36 is a front view showing a configuration of an electromechanical apparatus 1E according to a second embodiment. Fig. 37 is a side view showing the configuration of the electromechanical apparatus 1E of Fig. 36. The electromechanical apparatus 1E is provided with an elastic body 18 and a faster 19, instead of the faster 17 of the electromechanical apparatus 1 of Figs. 1 and 2. In addition, in the example of Figs. 36 and 37, the load device 21 is integrated with the electromechanical apparatus 1E, in a manner similar to that of the modified embodiment of Fig. 19.

In the present specification, an elastic body 16 is also referred to as a "first elastic body", and the elastic body 18 is also referred to as a "second elastic body".

The elastic body 18 and the faster 19 support the housing 10 with respect to a movable external object (movable object). In a manner similar to that of the first embodiment, the movable object may be a body of a human or an animal, may be an article attached to or held by a human or an animal, may be a mechanical device, or may be an article deformed by wind power or hydraulic power.

In the example of Figs. 36 and 37, the elastic body 18 is a coil spring that suspends the housing 10 from an external object, and is compressed and extended along the plumb line.

The faster 19 may be configured to be inserted into a belt, a garment, or the like, or sandwiched therebetween, in a manner similar to that of the faster 17 of Fig. 1. The faster 19 may be made of one member, or may be made of a plurality of members including a spring or the like. In addition, the faster 19 may be a safety pin, a hook-and-loop fastener, or the like, that can be attached to a garment, or may be an adhesive tape that can be adhered to a garment or skin. In addition, the faster 19 may be a belt or a string that can be wrapped around an arm, a leg, a body, or the like. In addition, the faster 19 may be a string that can be tied to a shoelace or the like. If the movable object is a non-living matter, the faster 19 may include a screw.

According to the first embodiment, the electromechanical apparatus 1 itself can be directly attached to a movable object, such as a body of a human, or an article, to effectively convert a force generated by acceleration and deceleration of the movable object into swinging of the pendulum 11, and therefore, it is possible to increase electric power and electric energy to be generated. According to the second embodiment, the housing 10 and the movable object are connected using the elastic body 18 in order to more effectively generate electric power. For example, when a human walks, the amplitude of the swinging in the up-down direction is not so large. However, by using the elastic body 18 as in the present embodiment, it is possible to increase the amplitude of the swinging of the housing 10 than that of the first embodiment. Therefore, it is possible to effectively increase the electric power and the electric energy to be generated by the electromechanical apparatus 1E.

In a manner similar to that of the first embodiment, the bob 11b of the pendulum 11 receives a force from acceleration and deceleration due to movement, such as walking or a posture change of a human, to obtain kinetic energy. The kinetic energy of the bob 11b is converted into the potential energy of gravity applied to the bob 11b, and the potential energy is re-converted into the kinetic energy. In addition, the kinetic energy and the potential energy of the bob 11b are also converted into the elastic energy of the elastic body 16, and the elastic energy of the elastic body 16 is re-converted into the kinetic energy and the potential energy of the bob 11b. In addition, since the electromechanical apparatus 1E is provided with the elastic body 18, the housing 10 oscillates in the vertical direction in response to a force from the swinging of the body of the human in the up-down direction. The potential energy of the housing 10 and its internal components is converted into the elastic energy of the elastic body 18, and the elastic energy of the elastic body 18 is re-converted into the potential energy of the housing 10 and its internal components. The housing 10 oscillates and the pendulum 11 swings while repeating conversion among of the kinetic energy, the potential energy, and the elastic energy, and the electric power is continuously generated. When acceleration and deceleration are periodically repeated, the electric power can be continuously generated for a long time. In this case, if the specification of the elastic body 18 is set such that the natural period of the elastic body 18 is equal to the natural period of the elastic body 16 and the period of the pendulum 11, the pendulum 11 and the elastic bodies 16 and 18 effectively resonate, and it is possible to effectively generate electric power.

In this case, in a manner similar to that of the first embodiment, the period of the pendulum 11 is determined in consideration of the mechanical load of the gear mechanism 12, and the electrical load of the generator 13 and subsequent circuits (that is, the power converter circuit 15 and the load device 21). Therefore, the period of the pendulum 11 is measured when the generator 13 is connected to the load device 21, and the elastic body 18 has the natural period equal to the natural period of the elastic body 16, and equal to the period of the pendulum 11 observed when the generator 13 is connected to the load device 21.

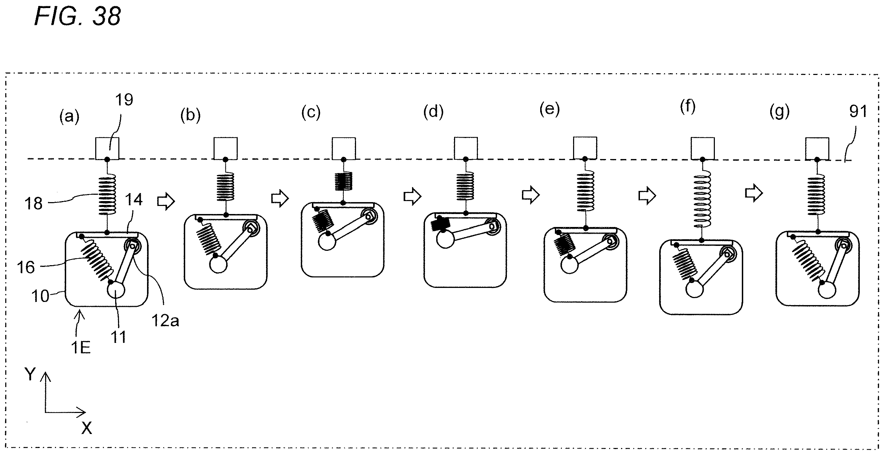

Fig. 38 is a diagram for explaining the operation of the electromechanical apparatus 1E of Fig. 36. The example of Fig. 38 shows a case where electric power is generated through walking of a user, with the electromechanical apparatus 1E being attached to the side of the waist of the user. In Fig. 38, a reference sign 91 denotes the body of the user. As shown in Figs. 38(a) to 38(g), the housing 10 oscillates in the vertical direction (Y direction), and the pendulum 11 swings about the input shaft 12a of the gear mechanism 12 mainly in response to the oscillation of the housing 10 in the vertical direction. In general, it is considered that walking is repetition of an acceleration period, a deceleration period, and a constant-speed period. In this case, when the housing 10 and the pendulum 11 are at the positions of Figs. 38(a) to 38(g), it is considered that the electric power can be most effectively generated from the walking of the user 100. Therefore, the electromechanical apparatus 1E is configured such that the period of the pendulum 11, the natural period of the elastic body 16, the natural period of the elastic body 18, and the periods of acceleration and deceleration of the walking user 100 are the same with each other.

Note that the natural period of the elastic body 18 is not necessarily completely the same with the period of the pendulum 11 and the natural period of the elastic body 16, and it is possible to generate practically sufficient electric power as long as the natural period of the elastic body 18 has a value near the period of the pendulum 11 and the natural period of the elastic body 16.

According to the electromechanical apparatus 1E of the second embodiment, in a manner similar to that of the electromechanical apparatus 1 and the like of the first embodiment, it is possible to continuously and unconsciously extract larger electric power than that of the prior art, from the user's daily activities and the like, at more opportunities than that of the prior art, while being able to be arranged in various postures. In addition, according to the electromechanical apparatus 1E of the second embodiment, since the elastic body 18 is provided, it is possible to effectively increase the electric power and the electric energy to be generated.

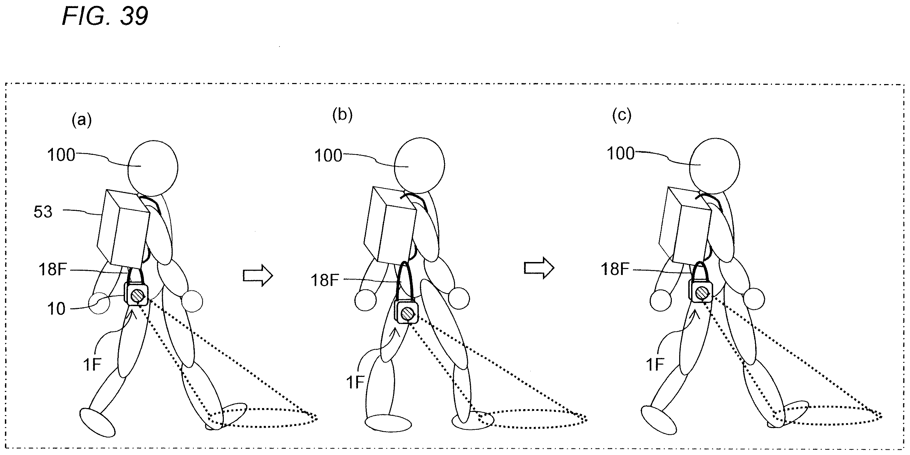

Fig. 39 is a diagram showing a use example of an electromechanical apparatus 1F according to a first modified embodiment of the second embodiment. The electromechanical apparatus 1F is provided with an elastic body 18F made of a strap member, such as rubber or plastic, instead of the elastic body 18 and the faster 19 of Fig. 36. The elastic body supporting the housing 10 with respect to a movable external object (movable object) is not limited to the coil spring, but may be any member to be elastically compressed and extended. The strap elastic body 18F is attached to, for example, a knapsack 53. As shown in Figs. 39(a) to 39(c), the elastic body 18F is compressed and extended in response to walking of the user 100. As a result, it is possible to effectively increase the electric power and the electric energy to be generated.

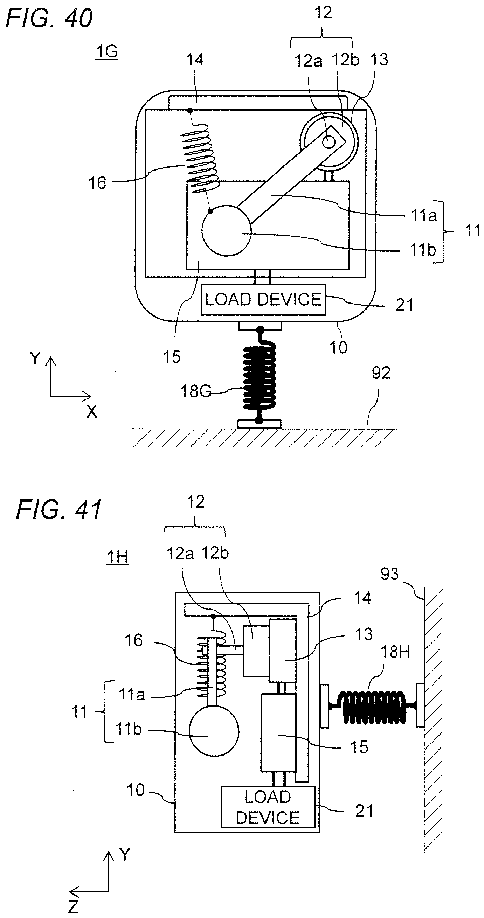

Fig. 40 is a front view showing a configuration of an electromechanical apparatus 1G according to a second modified embodiment of the second embodiment. Fig. 41 is a side view showing a configuration of an electromechanical apparatus 1H according to a third modified embodiment of the second embodiment. The electromechanical apparatus 1G is provided with an elastic body 18G, instead of the elastic body 18 and the faster 19 of Fig. 36, the elastic body 18G supporting the housing 10 with respect to an upper surface 92 of a movable object (for example, a mechanical device). The electromechanical apparatus 1H is provided with an elastic body 18H, instead of the elastic body 18 and the faster 19 of Fig. 36, the elastic body 18H supporting the housing 10 with respect to a side surface 93 of a movable object (for example, a mechanical device). The elastic body supporting the housing 10 with respect to a movable external object (movable object) is not limited to one suspending the housing 10, but may support the housing 10 in an upward direction, a lateral direction, or other directions.

### [Summary of Second Embodiment]

According to the electromechanical apparatus of the second embodiment, the electromechanical apparatus 1E is further provided with: a housing 10 that accommodates the gear mechanism 12, the generator 13, the pendulum 11, the frame 14, and the first elastic body 16; and a second elastic body 18 that supports the housing 10 with respect to an external object.

With such a configuration, it is possible to effectively increase the electric power and the electric energy to be generated, than those of the first embodiment.

According to the electromechanical apparatus of the second embodiment, the second elastic body 18 suspends the housing 10 from the external object, and is compressed and extended along a plumb line.

With such a configuration, it is possible to easily use the potential energy of gravity applied to the housing and internal components.

According to the electromechanical apparatus of the second embodiment, the second elastic body 18 has a natural period equal to a natural period of the first elastic body 16, and equal to a period of the pendulum 11 observed when the generator 13 is connected to a load device 21.

With such a configuration, the pendulum, the housing, and the elastic bodies effectively resonate, and it is possible to effectively generate electric power.

### THIRD EMBODIMENT

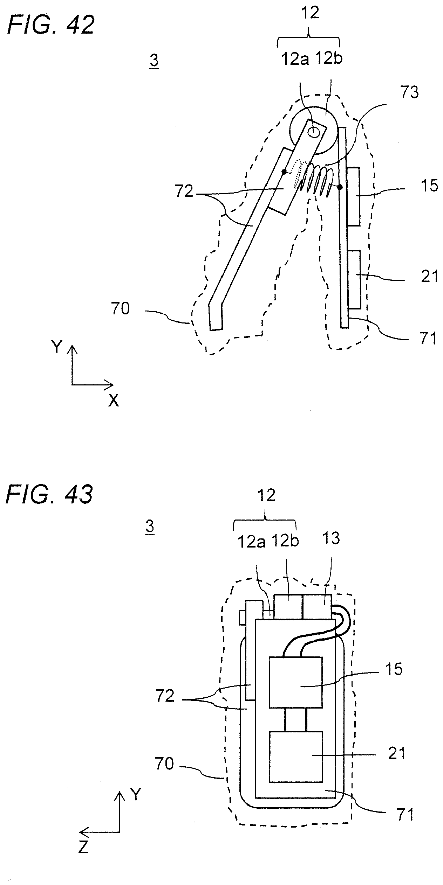

Fig. 42 is a side view showing a configuration of an electromechanical apparatus 3 according to a third embodiment. Fig. 43 is a front view showing a configuration of the electromechanical apparatus 3 of Fig. 42. The electromechanical apparatus 3 may be, for example, a wearable apparatus attached to the body or garment of a user. In addition, the electromechanical apparatus 3 may be attached to or incorporated into an article with which the body of a user 100 is temporarily in contact when the article is used by the user 100.

The electromechanical apparatus 3 is provided with a gear mechanism 12, a generator 13, a power converter circuit 15, a load device 21, a cover 70, an arm 71, an arm 72, and an elastic body 73.

The arm 71 is provided at a fixed position relative to the gear mechanism 12 and the generator 13. The arm 72 is connected to, i.e., engaged or integrated with, the input shaft 12a of a gear mechanism 12. For example, the arms 71 and 72 are shaped as a plate or a stick. Each of the arms 71 and 72 may be formed of one member, or formed of a plurality of members.

In the present specification, the arm 71 is also referred to as a "first arm", and the arm 72 is also referred to as a "second arm".

The elastic body 73 supports the arm 72 with respect to the arm 71 so as to generate a restoring force to a predetermined position. In the example of Fig. 42, the elastic body 73 is a coil spring connected between the arms 71 and 72. In addition, Fig. 42 shows a state in which the elastic body 73 has a natural length. At this time, the arm 72 has an angle of, for example, 20 to 30 degrees, with respect to the arm 71. When the arm 72 rotates clockwise or counterclockwise from the position in the state of Fig. 42 in response to an external force, the elastic body 73 generates a restoring force so as to return the arm 72 to its original position. The elastic body 73 may be directly connected to the arm 71, or may be indirectly connected to the arm 71 via other members.

The cover 70 is a flexible bag member that surrounds the gear mechanism 12, the generator 13, the power converter circuit 15, the load device 21, the arm 71, the arm 72, and the elastic body 73. Since the cover 70 protects the other components of the electromechanical apparatus 3, the user would experience reduced discomfort, for example, when the electromechanical apparatus 3 is attached to the body of the user. The power converter circuit 15 may be omitted, may be provided outside the cover 70, or may be integrated with, for example, the load device 21. Figs. 42, 43, and others indicate the cover 70 by a broken line for illustrative purpose.

The gear mechanism 12, the generator 13, the power converter circuit 15, and the load device 21 are configured in a manner similar to that of the corresponding components of the electromechanical apparatus 1 and the like according to the first embodiment. The power converter circuit 15 and the load device 21 may be provided, for example, to the arm 71.

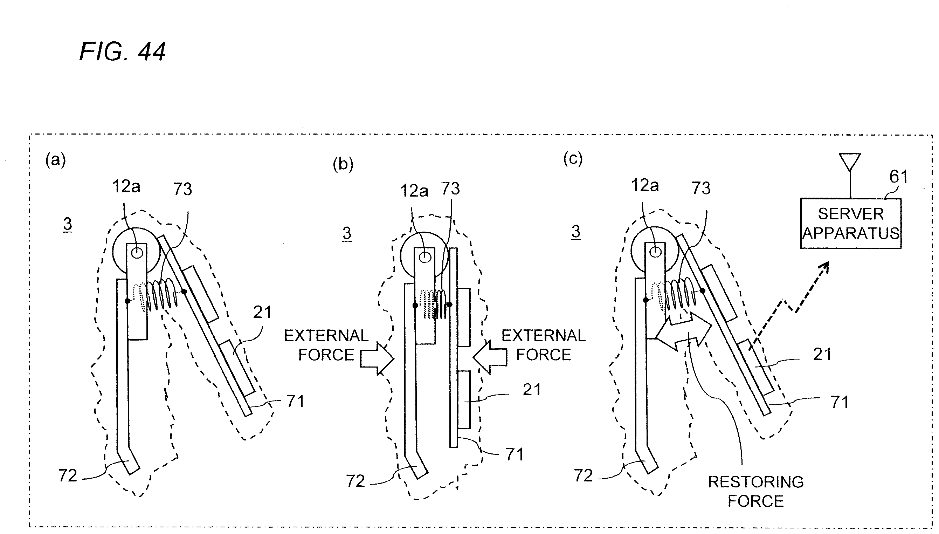

Fig. 44 is a diagram for explaining the operation of the electromechanical apparatus 3 of Fig. 42. Fig. 44(a) shows a state in which no external force acts on the arms 71 and 72, and the elastic body 73 has a natural length. Fig. 44(b) shows a state in which the arms 71 and 72 are subject to an external force and come close to each other, and the elastic body 73 is compressed. Fig. 44(c) shows a state in which the arms 71 and 72 return to their original positions (Fig. 44(a)) by the restoring force of the elastic body 73. The arm 72 rotates around the input shaft 12a of the gear mechanism 12 in response to the external force acting on the arms 71 and 72, or in response to the restoring force of the elastic body 73, and the generator 13 generates electric power in response to the rotation of the arm 72. As described above, the electromechanical apparatus 3 generates electric power in response to the movement of the arm 72 with respect to the arm 71 (that is, opening and closing of the arms 71 and 72), and supplies the generated electric power to the load device 21. The example of Fig. 44 shows a case where the load device 21 is a wireless communication device, and when the electromechanical apparatus 3 generates electric power, the wireless communication device communicates with an external server apparatus 61 using the generated electric power.

As described above, the electromechanical apparatus 3 may be, for example, a wearable apparatus attached to the body or garment of the user. In addition, the electromechanical apparatus 3 may be attached to or incorporated into an article with which the body of a user 100 is temporarily in contact when the article is used by the user 100. Use examples of the electromechanical apparatus 3 will be described later. Therefore, according to the electromechanical apparatus 3, in a manner similar to that of the electromechanical apparatuses of the first and second embodiments, it is possible to continuously and unconsciously extract larger electric power than that of the prior art, from the user's daily activities and the like, at more opportunities than that of the prior art, while being able to be arranged in various postures.

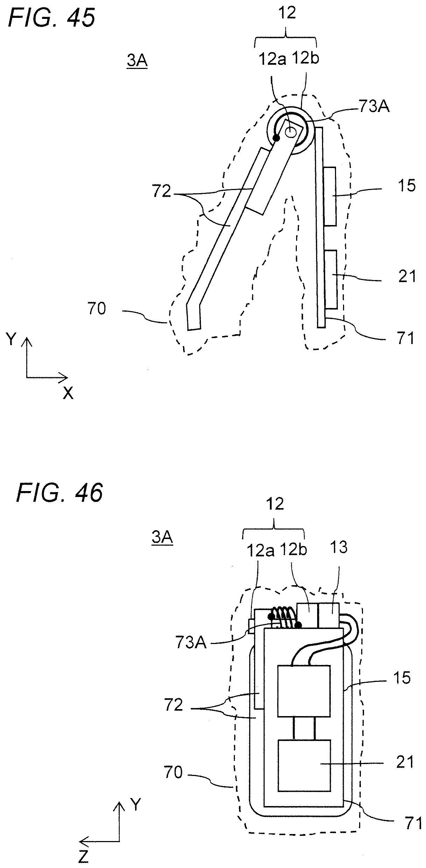

Fig. 45 is a side view showing a configuration of an electromechanical apparatus 3A according to a first modified embodiment of the third embodiment. Fig. 46 is a front view showing the configuration of the electromechanical apparatus 3A of Fig. 45. The electromechanical apparatus 3A is provided with an elastic body 73A as a torsion spring, instead of the elastic body 73 of Fig. 42 as a coil spring.

The elastic body 73A is provided around the input shaft 12a of the gear mechanism 12. One end of the elastic body 73A is connected to the arm 72, and the other end thereof is connected to the housing 12b of the gear mechanism 12. Since the gear mechanism 12 is provided at a fixed position relative to the arm 71, the elastic body 73A is indirectly connected to the arm 71 by being connected to the housing 12b of the gear mechanism 12.

According to the electromechanical apparatus 3A, in a manner similar to that of the electromechanical apparatus 3 of Fig. 42, it is possible to continuously and unconsciously extract larger electric power than that of the prior art, from the user's daily activities and the like, at more opportunities than that of the prior art, while being able to be arranged in various postures.

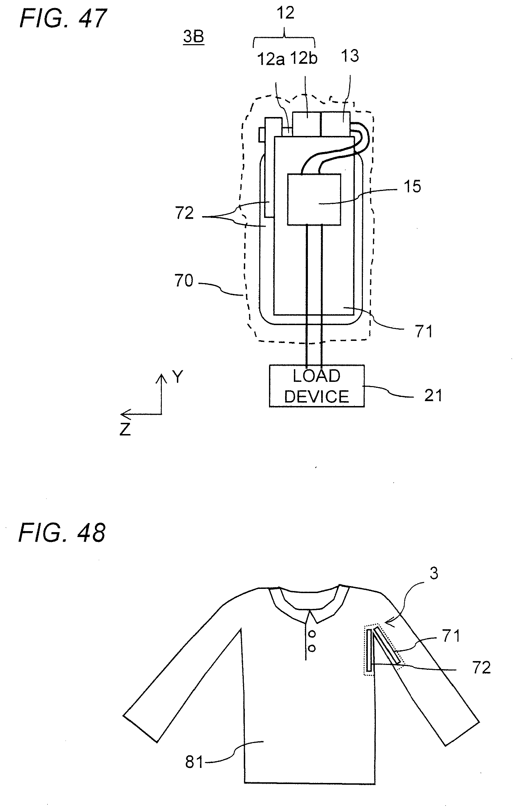

Fig. 47 is a front view showing a configuration of an electromechanical apparatus 3B according to a second modified embodiment of the third embodiment. The load device 21 may be provided outside the electromechanical apparatus 3B. The electromechanical apparatus 3B supplies the electric power generated by the generator 13, to the external load device 21. By separating the load device 21 from the electromechanical apparatus 3B, it is possible to supply the electric power to any load device. In addition, by separating the load device 21 from the electromechanical apparatus 3B, the load device 21 can be arranged with an improved degree of freedom.

### [Use Examples of Third Embodiment]

Next, with reference to Figs. 48 to 56, we explain use examples of the electromechanical apparatus according to the third embodiment.

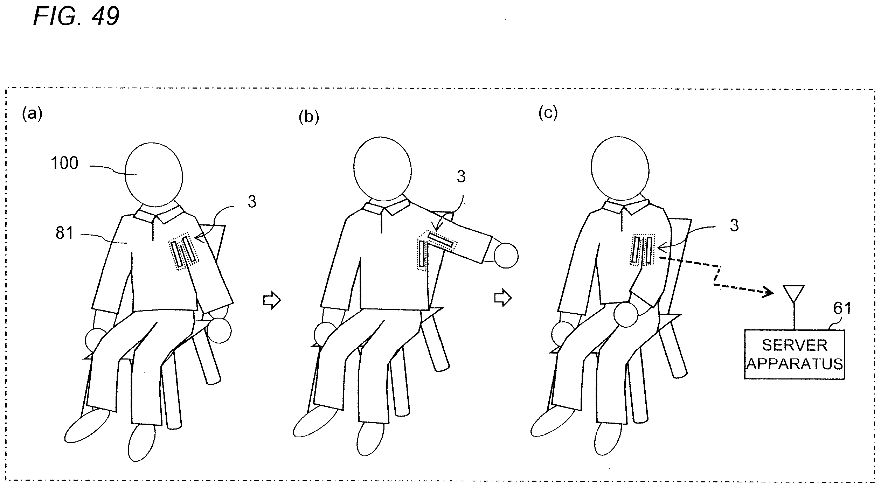

Figs. 48 and 49 are diagrams showing a first use example of the electromechanical apparatus 3 of Fig. 42. The electromechanical apparatus 3 is configured to be attachable to a joint of the user 100, or attachable to a portion of a garment corresponding to the joint of the user 100. The generator 13 generates electric power in response to movement of the joint.

In the example of Figs. 48 and 49, the electromechanical apparatus 3 is attached to a portion of a shirt 81 corresponding to an axilla of the user 100. The electromechanical apparatus 3 may be attached to the garment using, for example, a belt, a safety pin, a hook-and-loop fastener, an adhesive tape, a pocket of the garment, or the like.

As shown in Figs. 49(a) to 49(c), when the user 100 moves the arm, the arms 71 and 72 of the electromechanical apparatus 3 are opened and closed so as to follow the movement of the arm. The electromechanical apparatus 3 generates electric power in response to the opening and closing of the arms 71 and 72, and supplies the generated electric power to the load device 21. According to the example of Figs. 48 and 49, since there are many opportunities for the user to move the arm even when the user 100 is seated, it is possible to generate electric power at increased opportunities, and as a result, it is possible to effectively increase the electric power and the electric energy to be generated. According to the example of Figs. 48 and 49, it is possible to reasonably generate large electric power using ordinary movements of the joints of the user 100. The user 100 can generate electric power unconsciously or consciously using the electromechanical apparatus 3. The principle of leverage allows the user 100 to open and close the arms 71 and 72 with a small force, and therefore, to generate electric power unconsciously.

In the example of Figs. 48 and 49, the electromechanical apparatus 3 may be directly attached near the joint of the user 100, using a belt, a string, an adhesive tape, or the like, instead of being attached to the garment.

The electromechanical apparatus 3 may be attached near a joint, such as a shoulder, an elbow, a wrist, a hip joint, a knee, and an ankle, or attached to a portion of the garment corresponding to any of these joints.

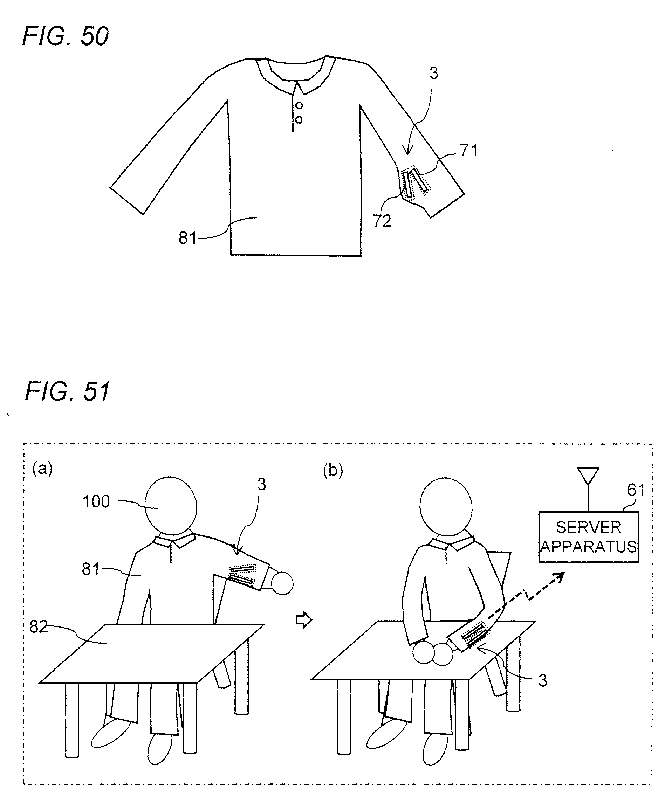

Figs. 50 and 51 are diagrams showing a second use example of the electromechanical apparatus 3 of Fig. 42. The electromechanical apparatus 3 is configured to be attachable not limited to the joint, but attachable to the body or a garment of the user 100. When the body of the user 100 is in contact with an article used by the user 100, an external force acts on the arms 71 and 72. The generator 13 generates electric power in response to contact and separation between the body of the user 100 and the article.

In the example of Figs. 50 and 51, the electromechanical apparatus 3 is attached to a part of the shirt 81 corresponding to the front arm of the user 100. The electromechanical apparatus 3 may be attached to a garment using, for example, a belt, a safety pin, a hook-and-loop fastener, an adhesive tape, a pocket of the garment, or the like. In addition, in the example of Figs. 50 and 51, the article used by the user 100 is a table 82.

Fig. 51(a) shows a state in which the front arm of the user 100 is separated from the table 82 such that the arms 71 and 72 are opened. Fig. 51(b) shows a state in which the front arm of the user 100 is in contact with the table 82 such that the arms 71 and 72 are closed. The electromechanical apparatus 3 generates electric power in response to the opening and closing of the arms 71 and 72, and supplies the generated electric power to the load device 21. According to the example of Figs. 50 and 51, since there are many opportunities for the front arm of the user 100 to contact with and separate from the table 82, it is possible to generate electric power at increased opportunities, and as a result, increase the electric power and the electric energy to be generated. In this case, "separation" is not limited to a state where the body of the user 100 and the article (or at least the electromechanical apparatus 3 and the article) are completely not in contact with each other, but indicates, for example, a state where the angle between the arms 71 and 72 is larger than the minimum. At least when the angle between the arms 71 and 72 varies, it is possible to generate electric power. According to the example of Figs. 50 and 51, it is possible to reasonably generate large electric power using daily actions of the user 100. The user 100 can generate electric power unconsciously or consciously using the electromechanical apparatus 3. The principle of leverage allows the user 100 to open and close the arms 71 and 72 with a small force, and therefore, to generate electric power unconsciously.

In the example of Figs. 50 and 51, the electromechanical apparatus 3 may be directly attached to the body of the user 100 using a belt, a string, an adhesive tape, or the like, instead of being attached to the garment.

The electromechanical apparatus 3 may be attached to a part of the body of the user other than the front arm, or attached to a part of a garment corresponding to the part of the body.

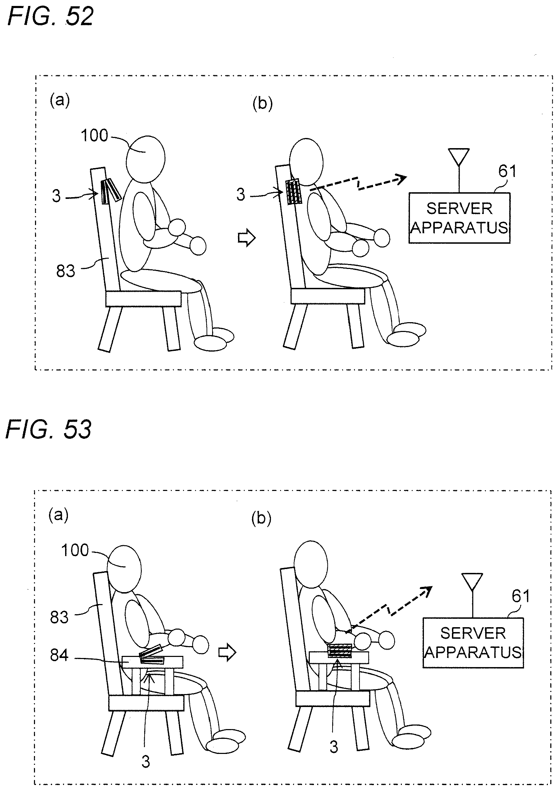

Fig. 52 is a diagram showing a third use example of the electromechanical apparatus 3 of Fig. 42. The electromechanical apparatus 3 is configured to be attachable to an article with which the body of the user 100 is temporarily in contact when the article is used by the user 100. When the body of the user 100 and the article are in contact with each other, an external force acts on the arms 71 and 72. The generator 13 generates electric power in response to contact and separation between the body of the user 100 and the article.

In the example of Fig. 52, an article with which the body of the user 100 is temporarily in contact when the article is used by the user 100 is a chair 83. The electromechanical apparatus 3 is attached to the backrest of the chair 83. The electromechanical apparatus 3 may be attached to the surface of the chair 83 using, for example, a belt, a hook-and-loop fastener, an adhesive tape, a pocket, or the like. In addition, the electromechanical apparatus 3 may also be embedded into the chair 83.

Fig. 52(a) shows a state in which the body of the user 100 is separated from the backrest of the chair 83 such that the arms 71 and 72 are opened. Fig. 52(b) shows a state in which the body of the user 100 is in contact with the backrest of the chair 83 such that the arms 71 and 72 are closed. The electromechanical apparatus 3 generates electric power in response to the opening and closing of the arms 71 and 72, and supplies the generated electric power to the load device 21. According to the example of Fig. 52, since there are many opportunities for the body of the user 100 to contact with and separate from the backrest of the chair 83, it is possible to generate electric power at increased opportunities, and as a result, increase the electric power and the electric energy to be generated. According to the example of Fig. 52, it is possible to reasonably generate large electric power using daily actions of the user 100. The user 100 can generate electric power unconsciously or consciously using the electromechanical apparatus 3. The principle of leverage allows the user 100 to open and close the arms 71 and 72 with a small force, and therefore, to generate electric power unconsciously.

Fig. 53 is a diagram showing a fourth use example of the electromechanical apparatus 3 of Fig. 42. In the example of Fig. 53, an article with which the body of the user 100 is temporarily is contact when the article is used by the user 100 is an armrest 84 of the chair 83. The electromechanical apparatus 3 is attached to the armrest 84. According to the example of Fig. 53, it is possible to reasonably generate large electric power using daily actions of the user 100, in a manner similar to that of the use example of Fig. 52.

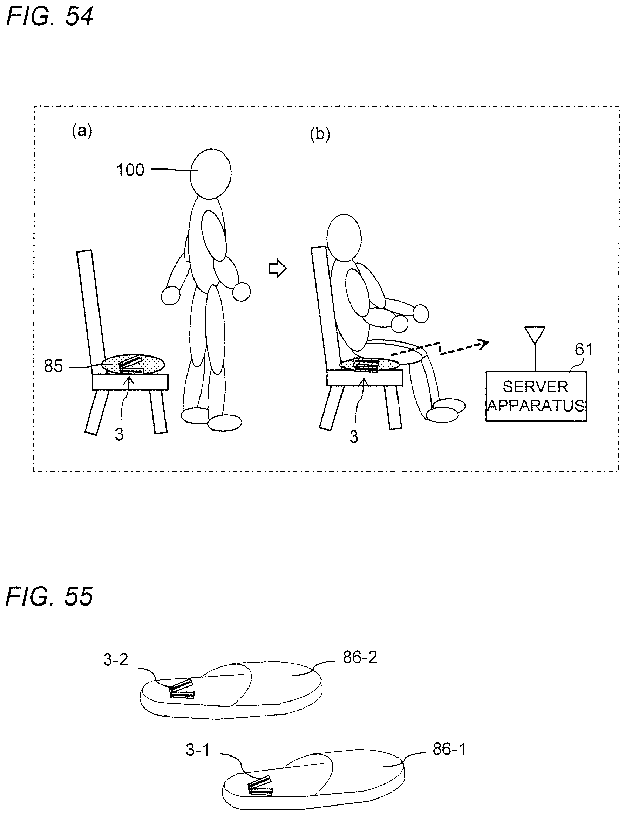

Fig. 54 is a diagram showing a fifth use example of the electromechanical apparatus 3 of Fig. 42. In the example of Fig. 54, an article with which the body of the user 100 is temporarily in contact when the article is used by the user 100 is a cushion 85. The electromechanical apparatus 3 is incorporated inside the cushion 85. According to the example of Fig. 54, it is possible to reasonably generate large electric power using daily actions of the user 100, in a manner similar to that of the use examples of Figs. 52 and 53.

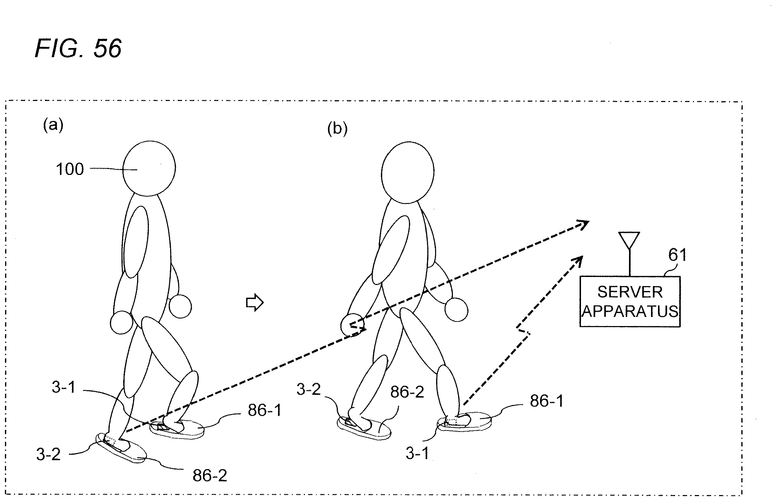

Figs. 55 and 56 are diagrams showing a sixth use example of the electromechanical apparatus 3 of Fig. 42. In the example of Figs. 55 and 56, articles with which the body of the user 100 is temporarily in contact when the articles are used by the user 100 are slippers 86-1 and 86-2. Electromechanical apparatuses 3-1 and 3-2 are attached to heel portions of the slippers 86-1 and 86-2, respectively.

Fig. 56(a) shows a state in which the right heel of the user 100 is separated from the slipper 86-1 such that the arms 71 and 72 of the electromechanical apparatus 3-1 are opened, while the left heel of the user 100 is in contact with the slipper 86-2 such that the arms 71 and 72 of the electromechanical apparatus 3-2 are closed. Fig. 56(b) shows a state in which the right heel of the user 100 is in contact with the slipper 86-1 such that the arms 71 and 72 of the electromechanical apparatus 3-1 are closed, while the left heel of the user 100 is separated from the slipper 86-2 such that the arms 71 and 72 of the electromechanical apparatus 3-2 are open. The electromechanical apparatuses 3-1 and 3-2 generate electric power in response to the opening and closing of the arms 71 and 72, and supply the generated electric power to the load device 21. According to the example of Figs. 55 and 56, since there are many opportunities for the heel of the user 100 to contact with and separate from the slippers 86-1 and 86-2, it is possible to generate electric power at increased opportunities, and as a result, increase the electric power and the electric energy to be generated. According to the example of Figs. 55 and 56, it is possible to reasonably generate large electric power using the daily operation of the user 100.

The examples of Figs. 49 to 56 show a case where the load device 21 is a wireless communication device, and when the electromechanical apparatus 3 generates electric power, the wireless communication device communicates with the external server apparatus 61 using the generated electric power.

For example, even if only small electric energy can be generated in one action, such as up and down motions of an arm, the electric power generated over a plurality of actions may be stored in the power storage circuit 32. When the electric energy stored in the power storage circuit 32 reaches a predetermined threshold sufficient to operate the load device 21, the electric power stored in the power storage circuit 32 may be supplied to the load device 21. In this case, the load device 21 includes, for example, a sensor for biological information, and a wireless communication device. When the electric energy stored in the power storage circuit 32 reaches a predetermined threshold sufficient to operate the load device 21, the user's own motion, body temperature, heartbeat, and the like are detected using the sensor, and such data is transmitted to the server apparatus 61 using the wireless communication device, and thus, the data is available for watching and the like. In addition, if the load device 21 is a lighting device, the hand of the user 100 can be illuminated by repeating an action of the body of the user 100 (for example, opening and closing an axilla, and the like) a predetermined number of times as necessary.

By attaching the electromechanical apparatus 3 to various articles that humans use on a daily basis, it is possible to dramatically increase opportunities for generating electric power.

### [Summary of Third Embodiment]

According to the electromechanical apparatus of the third embodiment, the electromechanical apparatus 3 is provided with: a gear mechanism 12, a generator 13, a first arm 71, a second arm 72, an elastic body 73. The gear mechanism 12 has an input shaft 12a and transmits rotation of the input shaft 12a. The generator 13 generates electric power in response to the rotation transmitted by the gear mechanism 12. The first arm 71 is connected to the gear mechanism 12 and the generator 13 at a fixed position relative to the gear mechanism 12 and the generator 13. The second arm 72 is connected to the input shaft 12a of the gear mechanism 12. The elastic body 73 supports the second arm 72 with respect to the first arm 71 so as to generate a restoring force to a predetermined position. The second arm 72 rotates around the input shaft 12a of the gear mechanism 12 in response to an external force acting on the first arm 71 and the second arm 72, or in response to the restoring force of the elastic body 73, and the generator 13 generates the electric power in response to rotation of the second arm 72.

With such a configuration, it is possible to continuously and unconsciously extract larger electric power than that of the prior art, from the user's daily activities and the like, at more opportunities than that of the prior art, while being able to be arranged in various postures.

According to the electromechanical apparatus of the third embodiment, the elastic body 73 may be a coil spring connected between the first arm 71 and the second arm 72.

With such a configuration, the second arm can be supported with respect to the first arm so as to generate the restoring force to the predetermined position.

According to the electromechanical apparatus of the third embodiment, the elastic body 73 may be a torsion spring provided around the input shaft 12a of the gear mechanism 12.

With such a configuration, the second arm can be supported with respect to the first arm so as to generate the restoring force to the predetermined position.

According to the electromechanical apparatus of the third embodiment, the electromechanical apparatus 3 may be further provided with a load device 21 that operates with the electric power generated by the generator 13.

With such a configuration, integrating the electromechanical apparatus with the load device results in improved convenience.

According to the electromechanical apparatus of the third embodiment, the electromechanical apparatus 3 may supply the electric power generated by the generator 13 to an external load device 21.

With such a configuration, it is possible to improve the degree of freedom in design of the electromechanical apparatus and the load device.

According to the electromechanical apparatus of the third embodiment, the electromechanical apparatus 3 may supply the electric power generated by the generator 13 to the load device 21 in real time.

With such a configuration, it is possible to generate electric power sufficiently large to operate the load device, and therefore, it is possible to operate the load device in real time.

According to the electromechanical apparatus of the third embodiment, the electromechanical apparatus 3 may be further provided with a power storage device 32 that stores the electric power generated by the generator 13. When stored electric energy of the power storage device 32 reaches a predetermined threshold sufficient to operate the load device 21, the electromechanical apparatus 3 supplies the electric power stored in the power storage device 32, to the load device 21.

With such a configuration, even when small electric power is generated, it is possible to accumulate the generated electric power to operate the load device.

According to the electromechanical apparatus of the third embodiment, the load device 21 includes any one of a lighting device, a rechargeable battery, a motor, a sensor, and a wireless communication device.

With such a configuration, it is possible to operate any load device according to the user's needs.

According to the electromechanical apparatus of the third embodiment, the electromechanical apparatus 3 may be configured to be attachable to a joint of a user 100, or attachable to a portion of a garment corresponding to the joint of the user 100. The generator 13 generates the electric power in response to movement of the joint.

With such a configuration, it is possible to generate the electric power in response to movement of the joint.

According to the electromechanical apparatus of the third embodiment, the electromechanical apparatus 3 may be configured to be attachable to a body of a user 100, or attachable to a garment. When the body of the user 100 is in contact with an article used by the user 100, an external force acts on the first arm 71 and the second arm 72. The generator 13 generates the electric power in response to contact and separation between the body of the user 100 and the article.

With such a configuration, it is possible to generate the electric power in response to contact and separation between the body of the user and the article.

According to the electromechanical apparatus of the third embodiment, the electromechanical apparatus 3 may be configured to be attachable to an article with which a body of a user 100 is temporarily in contact when the article is used by the user 100. When the body of the user 100 and the article are in contact with each other, an external force acts on the first arm 71 and the second arm 72. The generator 13 generates the electric power in response to contact and separation between the body of the user 100 and the article.

With such a configuration, it is possible to generate the electric power in response to contact and separation between the body of the user and the article.

### OTHER MODIFIED EMBODIMENTS

According to each embodiment of the present disclosure, the elastic body is not limited to the coil spring and the torsion spring, and may be any member to be elastically compressed and extended or twisted, including a strap member, such as rubber or plastic, and the like.

According to each embodiment of the present disclosure, we described a case where the pendulum 11 and the like swings about the input shaft 12a of the gear mechanism 12, that is, around one shaft, at least within a predetermined angular range. Since a person move with their feet, the person's walking is a three-dimensional movement including up-down movement due to the conditions of the walking path, the habit of walking, or the like. Therefore, the electromechanical apparatus may be configured such that a pendulum swings around two or three axes orthogonal to or intersecting each other at least within a predetermined angular range, so that one generator generates electric power in response to the swings of the pendulum. In addition, the electromechanical apparatus may be provided with two or three generators having respective rotating shafts arranged along two or three axes orthogonal to or intersecting each other. The outputted electric power of the plurality of generators may be stored in a common power storage circuit, or may be stored in different power storage circuits. Thus, it is possible to efficiently utilize the two- or three-dimensional inertial force, centrifugal force, gravity, and other acting forces, that are spatially generated by the movement of the movable object, and increase the generated electric energy.

According to each embodiment of the present disclosure, we described the case where the generator including the stator and the rotor is rotated forward and reverse according to the swinging of the pendulum. Instead of such a generator, a linear reciprocating generator may be used. The linear reciprocating generator may be, for example, a linear motor. In this case, the electromechanical apparatus is provided with, instead of the pendulum, any reciprocating mechanism that drives the linear reciprocating generator in response to the shaking of the whole of the electromechanical apparatus. The linear reciprocating generator generates positive or negative voltage at the output terminals in response to the operation of the reciprocating mechanism.

When the output voltage of the generator 13 is sufficiently high, the gear mechanism 12 may be omitted, or the gear mechanism 12 may be configured to transmit the rotation of the input shaft 12a to the generator 13 at a predetermined decreasing gear ratio. In addition, the input shaft 12a of the gear mechanism 12 and the rotating shaft of the generator 13 may or may not be coaxial. In addition, the spur gear train and a flat generator may be arranged in parallel.

Although the case where the rectifier circuit 31 and the power storage circuit 32 perform voltage doubling rectification has been described with reference to Fig. 3, the rectifier circuit 31 may perform half-wave rectification, full-wave rectification, or other rectification.

The frame may be integrated with the housing of the electromechanical apparatus. Thus, it is possible to reduce the number of components of the electromechanical apparatus, and simplify the configuration of the electromechanical apparatus.

The components of the electromechanical apparatus may be made of various materials, and may have various operation principles. These materials and operation principles can be arbitrarily combined in accordance with the application of the electromechanical apparatus, and in accordance with the load device.

### INDUSTRIAL APPLICABILITY

According to the present disclosure, there is provided an electromechanical apparatus that is attached to a movable object, and converts the mechanical energy of the movements or actions of the movable object into electrical energy. According to the present disclosure, an electromechanical apparatus is provided, capable of continuously and unconsciously extracting relatively large electric power from daily activities of a user.

According to the present disclosure, it is possible to determine the time, time length, and type of acceleration and deceleration of a movable object, and therefore, it is also possible to detect the behavior of a human, an animal, or other objects to which the electromechanical apparatus is attached.

### REFERENCE SIGNS LIST

1, 1A to 1H, 3, 3A, 3B: ELECTROMECHANICAL APPARATUS
10: HOUSING
11: PENDULUM
12: GEAR MECHANISM
12a: INPUT SHAFT
12b: HOUSING
13: GENERATOR
14: FRAME
15: POWER CONVERTER CIRCUIT
16, 16Aa, 16Ab, 16B: ELASTIC BODY
17: FASTER
18, 18F to 18H: ELASTIC BODY
19: FASTER
21: LOAD DEVICE
22: BATTERY
23: ELECTRIC FAN
31: RECTIFIER CIRCUIT
32: POWER STORAGE CIRCUIT
33: CONTROL CIRCUIT
41: BELT
42: BAG
43: TRUNK
45: STRAP
46: POCKET
47: SHOE
48: CAP
49: GLASSES
50: HELMET
51: UMBRELLA
52: STICK
53: KNAPSACK
61: SERVER APPARATUS
70: COVER
71: FIRST ARM
72: SECOND ARM
73, 73A: ELASTIC BODY
81: SHIRT
82: TABLE
83: CHAIR
84: ARMREST
85: CUSHION
86-1, 86-2: SLIPPER
100: USER
110: ANIMAL
120: WASHING MACHINE
130: BICYCLE
140: TREE

## Claims

1. An electromechanical apparatus comprising:
a gear mechanism that has an input shaft and transmits rotation of the input shaft;
a generator that generates electric power in response to the rotation transmitted by the gear mechanism;
a pendulum that is connected to the input shaft;
a frame provided at a fixed position relative to the gear mechanism and the generator; and
a first elastic body that supports the pendulum with respect to the frame so as to generate a restoring force to a predetermined position,
wherein the pendulum swings about the input shaft in response to shaking of a whole of the electromechanical apparatus, or in response to the restoring force of the first elastic body, and the generator generates the electric power in response to swinging of the pendulum.

2. The electromechanical apparatus as claimed in claim 1,
wherein the first elastic body is a coil spring that is compressed and extended within a plane including a trajectory of the pendulum.

3. The electromechanical apparatus as claimed in claim 1,
wherein the first elastic body is a torsion spring provided around the input shaft.

4. The electromechanical apparatus as claimed in any one of claims 1 to 3,
wherein the first elastic body has a natural period equal to a period of the pendulum observed when the generator is connected to a load device.

5. The electromechanical apparatus as claimed in any one of claims 1 to 4,
wherein the electromechanical apparatus further comprises:
a housing that accommodates the gear mechanism, the generator, the pendulum, the frame, and the first elastic body; and
a second elastic body that supports the housing with respect to an external object.

6. The electromechanical apparatus as claimed in claim 5,
wherein the second elastic body suspends the housing from the external object, and is compressed and extended along a plumb line.

7. The electromechanical apparatus as claimed in claim 5 or 6,
wherein the second elastic body has a natural period equal to a natural period of the first elastic body, and equal to a period of the pendulum observed when the generator is connected to a load device.

8. The electromechanical apparatus as claimed in any one of claims 1 to 7, further comprising a load device that operates with the electric power generated by the generator.

9. The electromechanical apparatus as claimed in any one of claims 1 to 7,
wherein the electromechanical apparatus supplies the electric power generated by the generator to an external load device.

10. The electromechanical apparatus as claimed in claim 8 or 9,
wherein the electromechanical apparatus supplies the electric power generated by the generator to the load device in real time.

11. The electromechanical apparatus as claimed in claim 8 or 9, further comprising a power storage device that stores the electric power generated by the generator,
wherein, when stored electric energy of the power storage device reaches a predetermined threshold sufficient to operate the load device, the electromechanical apparatus supplies the electric power stored in the power storage device, to the load device.

12. The electromechanical apparatus as claimed in any one of claims 8 to 11,
wherein the load device includes any one of a lighting device, a rechargeable battery, a motor, a sensor, and a wireless communication device.

13. The electromechanical apparatus as claimed in any one of claims 1 to 12,
wherein the electromechanical apparatus is configured to be attachable to a body of a human or an animal, and
wherein the generator generates the electric power in response to movement of the body of the human or the animal.

14. The electromechanical apparatus as claimed in any one of claims 1 to 12,
wherein the electromechanical apparatus is configured to be attachable to an article attached to or held by a human or an animal, and
wherein the generator generates the electric power in response to movement of the article.

15. The electromechanical apparatus as claimed in any one of claims 1 to 12,
wherein the electromechanical apparatus is configured to be attachable to a mechanical device, and
wherein the generator generates the electric power in response to movement of the mechanical device.

16. The electromechanical apparatus as claimed in any one of claims 1 to 12,
wherein the electromechanical apparatus is configured to be attachable to an article deformed by wind power or hydraulic power, and
wherein the generator generates the electric power in response to movement of the article.

17. The electromechanical apparatus as claimed in any one of claims 1 to 12,
wherein the electromechanical apparatus is configured to be held by one hand of a human, and
wherein the generator generates the electric power in response to movement of the one hand having a directional component within a plane perpendicular to the input shaft.

18. An electromechanical apparatus comprising:
a gear mechanism that has an input shaft and transmits rotation of the input shaft;
a generator that generates electric power in response to the rotation transmitted by the gear mechanism;
a first arm connected to the gear mechanism and the generator at a fixed position relative to the gear mechanism and the generator;
a second arm connected to the input shaft; and
an elastic body that supports the second arm with respect to the first arm so as to generate a restoring force to a predetermined position,
wherein the second arm rotates around the input shaft in response to an external force acting on the first and second arms, or in response to the restoring force of the elastic body, and the generator generates the electric power in response to rotation of the second arm.

19. The electromechanical apparatus as claimed in claim 18,
wherein the elastic body is a coil spring connected between the first and second arms.

20. The electromechanical apparatus as claimed in claim 18,
wherein the elastic body is a torsion spring provided around the input shaft.

21. The electromechanical apparatus as claimed in any one of claims 18 to 20, further comprising a load device that operates with the electric power generated by the generator.

22. The electromechanical apparatus as claimed in any one of claims 18 to 20,
wherein the electromechanical apparatus supplies the electric power generated by the generator to an external load device.

23. The electromechanical apparatus as claimed in claim 21 or 22,
wherein the electromechanical apparatus supplies the electric power generated by the generator to the load device in real time.

24. The electromechanical apparatus as claimed in claim 21 or 22, further comprising a power storage device that stores the electric power generated by the generator,
wherein, when stored electric energy of the power storage device reaches a predetermined threshold sufficient to operate the load device, the electromechanical apparatus supplies the electric power stored in the power storage device, to the load device.

25. The electromechanical apparatus as claimed in any one of claims 21 to 24,
wherein the load device includes any one of a lighting device, a rechargeable battery, a motor, a sensor, and a wireless communication device.

26. The electromechanical apparatus as claimed in any one of claims 18 to 25,
wherein the electromechanical apparatus is configured to be attachable to a joint of a human, or attachable to a portion of a garment corresponding to the joint of the human, and
wherein the generator generates the electric power in response to movement of the joint.

27. The electromechanical apparatus as claimed in any one of claims 18 to 25,
wherein the electromechanical apparatus is configured to be attachable to a body of a human, or attachable to a garment,
wherein, when the body of the human is in contact with an article used by the human, an external force acts on the first and second arms, and
wherein the generator generates the electric power in response to contact and separation between the body of the human and the article.

28. The electromechanical apparatus as claimed in any one of claims 18 to 25,
wherein the electromechanical apparatus is configured to be attachable to an article with which a body of a human is temporarily in contact when the article is used by the human,
wherein, when the body of the human and the article are in contact with each other, an external force acts on the first and second arms, and
wherein the generator generates the electric power in response to contact and separation between the body of the human and the article.
